(19)

Europäisches
Patentamt
European
Patent Office
Office européen
des brevets

(11) **EP 4 707 887 A1**

(12) **EUROPEAN PATENT APPLICATION**

(43) Date of publication:
**11.03.2026 Bulletin 2026/11**

(21) Application number: **25201252.1**

(22) Date of filing: **09.09.2025**

(51) International Patent Classification (IPC):
**G02B 6/35** (2006.01)

(52) Cooperative Patent Classification (CPC):
**G02B 6/3556; G02B 6/3518; G02B 6/3586;
G02B 6/3588**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **10.09.2024 US 202418829551
20.02.2025 US 202519058214**

(71) Applicant: **Ciena Corporation
Hanover, MD 21076 (US)**

(72) Inventors:
• **BOERTJES, David W.**
Hanover, MD 21076 (US)
• **RIVAUD, Daniel**
Hanover, MD 21076 (US)
• **FRANKEL, Michael Y.**
Hanover, MD 21076 (US)
• **PELEKHATY, Vladimir**
Hanover, MD 21076 (US)
• **COLTON, Fabien**
Hanover, MD 21076 (US)

(74) Representative: **Dehns
10 Old Bailey
London EC4M 7NG (GB)**

(54) **HIGH PORT COUNT OPTICAL CROSS CONNECT**

(57)　An optical cross connect (20) includes a plurality of modular subassemblies (10) each including one or more of a fiber collimator array (50, 52) and a Micro-ElectroMechanical Systems (MEMS) mirror array (54, 56), arranged relative to one another with an optical propagation region (22) in between. At least one fiber collimator array (50, 52) comprises probe ports (16) configured to emit alignment beams. Detectors (120, 412), integrated within the MEMS mirror arrays (54, 56), receive the alignment beams and provide positional data for active alignment. Control circuitry performs bulk alignment by coarsely aligning each fiber collimator array (50, 52) to its corresponding MEMS mirror array (54, 56), and further performs MEMS-to-MEMS alignment by measuring angular offsets and applying tilt corrections. An end-to-end continuity check is optionally conducted by transmitting a test beam between collimator arrays (50, 52). The modular design supports scaling beyond 1000 ports, redundancy, and in-service real-time alignment.

*FIG. 1*

○ TRAFFIC PORT/MIRROR

◍ PROBE PORT/MIRROR

EP 4 707 887 A1

**(Cont. next page)**

*FIG. 14*

**Description**

**FIELD OF THE DISCLOSURE**

The present disclosure relates generally to networking and computing. More particularly, the present disclosure relates to systems and methods for a high port count optical cross connect that is efficiently manufacturable and supports in-service active alignment.

**BACKGROUND OF THE DISCLOSURE**

An optical cross connect system is a device that routes optical signals directly between incoming and outgoing optical fibers (ports) without converting them to electrical signals. Essentially, it functions as a high-speed switch for light paths. Note, as is known in the art and as is described herein, an optical cross connect can also be referred to as an Optical Circuit Switch (OCS) and can be abbreviated as OXC or OCS. With the proliferation of Machine Learning (ML) and Artificial Intelligence (AI), data centers are exploding in terms of their compute power, leading to a significant increase in the interconnect between resources. An OCS is a key component and there is a need to scale such devices to 1000s of ports or more. However, there are issues with scale and cost of such devices, namely it is not cost effective to deploy a large OCS initially, i.e., one at full capacity, as well as reliability concerns of large devices, becoming single points of failure. There is a need for an OCS which supports modularity, redundancy, mass manufacturability, and high radix with low loss.

**BRIEF SUMMARY OF THE DISCLOSURE**

The present disclosure relates to systems and methods for in-service active alignment in high port count optical cross connects. The design described herein overcomes the limitations of optical bench technology by employing a novel approach to active alignment that uses smaller arrays of elements with a high degree of mechanical stability in the plane substantially perpendicular to the direction of light propagation. Unlike optical bench designs, which must also ensure stability in the direction of propagation, the design disclosed here eliminates that requirement through active control. This active control uses dedicated probe paths to measure the relative alignment of subcomponent planes, compensating for any misalignment by adjusting angles in real time. By incorporating this active alignment, the design of the optical components is simplified, specifically by separating the input, output, and multiple mirror planes into subassemblies that can be independently manufactured, tested, and assembled. This modular approach also allows for the servicing of a failed subcomponent without compromising the overall optical cross connect system, a capability not offered by previous generations.

Also, the present disclosure relates to systems and methods for manufacturable high port count optical cross connect, such as for use in data center applications and the like. In particular, the present disclosure includes a Micro-Electro-Mechanical Systems (MEMS) design with contemplated port scale in the thousands with a modular subcomponent design that includes redundancy for yield improvement, manufacturability, and service. Specifically, the approach described herein supports an ability to scale port count, in-service, alleviating the need to deploy at full fill. Further, the approach includes an active alignment technique via dedicated elements in the device, to improve stability and support calibration.

In an embodiment, an optical cross connect includes a plurality of subassemblies each including either an array of collimators and an array of adjustable mirrors, wherein the plurality of subassemblies are configured to modularly scale a size of the optical cross connect, wherein the plurality of subassemblies are arranged relative to one another with an optical propagation region in between, and wherein the plurality of subassemblies with the array of collimators each include one or more probe ports configured to support an alignment signal for active alignment control. Each of the plurality of subassemblies with the array of adjustable mirrors can include one or more detectors included in the array of adjustable mirrors, in lieu of a corresponding adjustable mirror. Each of the plurality of subassemblies can include a housing supporting either the array of collimators and the array of adjustable mirrors, and the housing includes electrical connectors to the array of adjustable mirrors and optical connections to the array of collimators. The housing supporting the array of collimators includes circuitry for physically alignment adjustments.

The plurality of subassemblies can include a first set of subassemblies and a second set of subassemblies opposing the first set of subassemblies with the optical propagation region in between. An overall size of the optical cross connect is based on a number of the plurality of subassemblies. The number of adjustable mirrors can include redundancy where some of the adjustable mirrors are unused. The plurality of subassemblies can include a first set of subassemblies and a second set of subassemblies opposing the first set of subassemblies with the optical propagation region in between and with a fixed set of mirrors in the optical propagation region. Each subassembly of the plurality of subassemblies includes a front portion having either the array of collimators and the array of mirrors thereon. The active alignment control includes compensating for angular alignment between two different subassemblies each with the array of mirrors, such that tilt angles support an acceptable loss between two collimators. The one or more probe ports can include at least three ports at edges of the array of collimators.

The active alignment control can include a laser connected to a probe port on a first array of collimators and configured to transmit the alignment signal; a receiver connected to a probe port on a second array of collimators and configured to receive the alignment signal, after the alignment signal traverse a pair of mirrors; and circuitry configured to measure angular offsets of the pair of mirrors. The circuitry can be further configured to apply a dither to the pair of mirrors, measure the alignment signal at the receiver over time based on the dither, and determine feedback for the pair of mirrors based on the measured alignment signal. The circuitry can be further configured to measure the angular offsets of the pair of mirrors in two different arrays of adjustable mirrors, and cause adjustment of all mirrors in the two different arrays of adjustable mirrors based on the measured angular offsets of the pair of mirrors. The size of the optical cross connect can be at least 1000 ports.

In another embodiment, a method of aligning an optical cross connect includes steps of, in the optical cross connect that includes a plurality of arrays with each array including one or more of collimators and adjustable mirrors, transmitting an alignment signal from an input probe port on an input array of collimators to a first mirror probe port on a first mirror array; directing the alignment signal from the first mirror port to a second mirror probe port on a second mirror array; and receiving and measuring the alignment signal on an output probe port on an output array. The steps can further include compensating for angular alignment of mirrors on the first mirror array and the second mirror array based on the measuring. The steps can further include applying a dither to the first mirror port and the second mirror port; measuring the alignment signal over time based on the dither; and determining feedback for mirrors on the first mirror array and the second mirror array based on the measured alignment signal. The steps can further include measuring angular offsets of first mirror probe port and the second mirror probe port; and causing adjustment of all mirrors in the first mirror array and the second mirror array based on the measured angular offsets. The input array of collimators and the output array of collimators can each include at least three ports at edge collimators.

## BRIEF DESCRIPTION OF THE DRAWINGS

The present disclosure is detailed through various drawings, where like components or steps are indicated by identical reference numbers for clarity and consistency.

FIG. 1 is a front view of a subassembly illustrating a front portion having traffic ports/mirrors and probe ports/mirrors.
FIG. 2 is a perspective view of the subassembly illustrating a housing connected to the front portion.
FIG. 3 is a front view of multiple subassemblies forming a portion of an optical cross connect.
FIG. 4 is a perspective view of the multiple subassemblies together in the optical cross connect.
FIG. 5 is a top view of the optical propagation region between the multiple subassemblies in FIG. 4 with two ports shown opposing one another.
FIG. 6 is a close-up view of one end of the OCS showing one layer in the 2D stack of input/output and mirror elements.
FIG. 7 is a logical diagram illustrating an example connection from an input array, to a first mirror array, to a second mirror array, to an output array.
FIG. 8 is a graph of the transmission coefficient of the signal path depending on the alignment angle of each axis of each mirror.
FIG. 9 is a graph of a sinusoidal dither applied to the axes of the mirrors.
FIG. 10 is a graph of the transmission coefficient indicating which direction the correction for misalignment should be.
FIG. 11 is a graph of a Fast Fourier transform (FFT) of the signals in FIG. 10.
FIG. 12 is a graph of points corresponding to the average power (so called DC or zeroth frequency point in the FFT), the fundamental (the frequency of the dither) and the second harmonic (2x the frequency of the dither), from the FFT of FIG. 11.
FIG. 13 is a diagram of a periscopic arrangement of collimators and mirrors.
FIG. 14 is a diagram of a compact arrangement of collimators and mirrors.
FIGS. 15 and 16 are diagrams of dense packing of collimators.
FIGS. 17 and 18 are graphs of vertical and horizontal angular deviation of beams for the hexagonal grid in FIG. 16.
FIGS. 19 and 20 are graphs of coupling efficiency of 1320 nm light in confocal pair of diameter 2.0 mm focusers at 640 mm versus deviations d1 and d2 from prescribed distance between fiber faces and lenses.
FIGS. 21 and 22 are graphs of coupling efficiency of 1320 nm light in pair of diameter 2.0 mm collimators at 640 mm versus deviations d1 and d2 from prescribed distance between fiber faces and lenses.
FIGS. 23 and 24 are graphs of coupling efficiency of two 1320 nm Gaussian beams with $w_o = 3~\mu m$ versus lateral displacement (FIG. 23) and angular misalignment (FIG. 24).
FIG. 25 is a flowchart of a process of aligning an optical cross connect.
FIGS. 26 - 28 illustrates three different arrangements of input/output arrays, MEMS arrays, and fixed mirrors, arranged relative to one another with the optical propagation region.

FIG. 29 is a front view of the subassembly illustrating a front portion having MEMS mirrors and a quad detector.

FIG. 30 is a diagram of an example arrangement of the MSM quadrant detector design.

FIG. 31 is another arrangement with four quadrant detectors at four corners of the matrix effectively forming a large, distributed quadrant PD.

FIGS. 32 - 49 are diagrams of an example form factor for a subassembly with ports for the input/output array, where the form factor includes alignment circuitry configured to align/adjust the front portion based on the quadrant detector feedback.

FIG. 50 is a diagram of example fiber collimator arrays in the arrangement of FIG. 28, each represented as a grid of circular apertures.

FIG. 51 is a diagram of MEMS mirror arrays in the arrangement of FIG. 28, each arranged as a grid of individual mirror elements.

FIG. 52 is a diagram of the arrangement of FIG. 28 in which two fiber collimator arrays from FIG. 50 are optically linked via two MEMS mirror arrays from FIG. 51.

FIG. 53 is a diagram illustrating a bulk alignment step used to orient the collimator arrays from FIG. 50 relative to the MEMS mirror arrays from FIG. 51.

FIG. 54 is a diagram of an example port element in the collimator arrays from FIG. 50.

FIG. 55 is a diagram of an example mirror-coupled, bidirectional probe port via the element in the collimator arrays from FIG. 50.

FIG. 56 is a schematic of how the two fiber collimator arrays interface with the two MEMS mirror arrays to measure MEMS-to-MEMS deflection angles once bulk alignment is complete.

FIG. 57 is a diagram of the source-destination relationship for the beam used in these MEMS-to-MEMS angle measurements in FIG. 56.

FIG. 58 is a schematic of how the two fiber collimator arrays interface with the two MEMS mirror arrays to perform an end-to-end continuity check.

FIG. 59 is a diagram of the source-destination relationship for the beam used in the end-to-end continuity check.

FIG. 60 is a flowchart of a process actively aligning a high port count optical cross connect that includes at least one pair of fiber collimator arrays and at least one pair of MEMS mirror arrays.

## DETAILED DESCRIPTION OF THE DISCLOSURE

Again, the present disclosure relates to systems and methods for in-service active alignment for high port count optical cross connect and systems and methods for manufacturable high port count optical cross connect, such as for use in data center applications and the like. Of note, conventional OCS which use MEMS mirrors are limited in scale due to yield and optomechanical considerations. See, e.g., Urata, Ryohei, et al. "Mission Apollo: landing optical circuit switching at datacenter scale." arXiv preprint arXiv:2208.10041 (2022), the contents of which are incorporated by reference. The main limitation is the application of passive alignment performed once at start of life (i.e., initial manufacturing, configuration, etc.). This requires a very stiff and stable optical setup typically referred to as an optical bench. This is a very limiting factor both in terms of the size of the device that can be manufactured, and the volume of propagation area that is used which must be above the surface of the bench. These switches are currently limited to a few hundred ports at most.

Active alignment has been shown on free space optical devices but is applied to each port carrying traffic signals. This requires additional optical components for tapping light on the input and output so that the alignment can be measured. Since this is done on each port, this is not practical for high port count devices and also has the disadvantage of imparting an amplitude dither to the signal being carried. This dither can cause problems with the receiver control loops and eat into the link margin of the channel both of which are undesirable. Active alignment involves the precise positioning and alignment of optical components relative to the switch to ensure optimal light path management and signal integrity.

The design of this OCS overcomes the limitations of optical bench technology by applying a novel approach to active alignment. This approach uses smaller arrays of elements which have a high degree of mechanical stability in the plane substantially perpendicular to the direction of light propagation. Where the optical bench must also provide stability in the direction of propagation, this restriction is eliminated from this design through active control. This control uses dedicated probe paths to measure the relative alignment of the planes of the subcomponents in order to compensate for misalignment. This compensation is done through adding or subtracting in the correct proportions from the angles each sub element of the components to correct for the angles of the plane in real time. This control system will be discussed later in this section. The existence of this active alignment is advantageously used to simplify the design of the optical components. In particular, we separate the input, output, and multiple mirror planes into subassemblies that can be manufactured, yielded, and assembled independently. This could also allow for servicing a failed subcomponent without destroying the overall OCS which cannot be done with previous generations.

## Component design

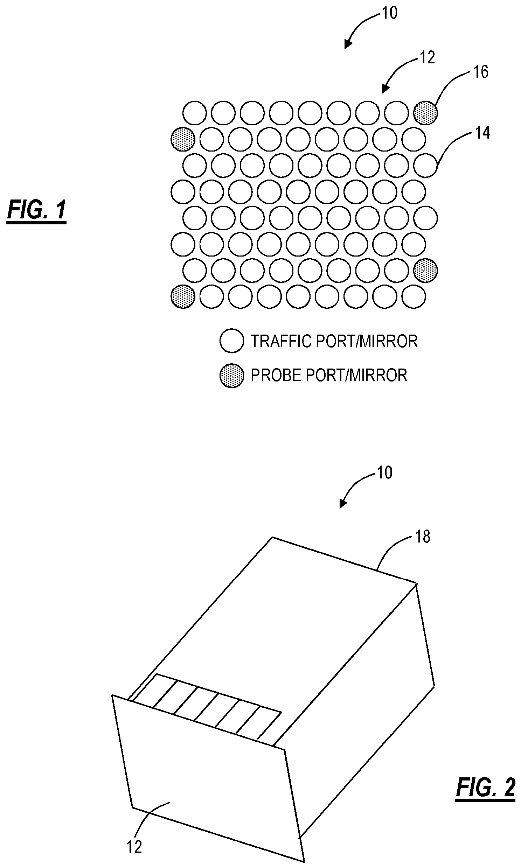

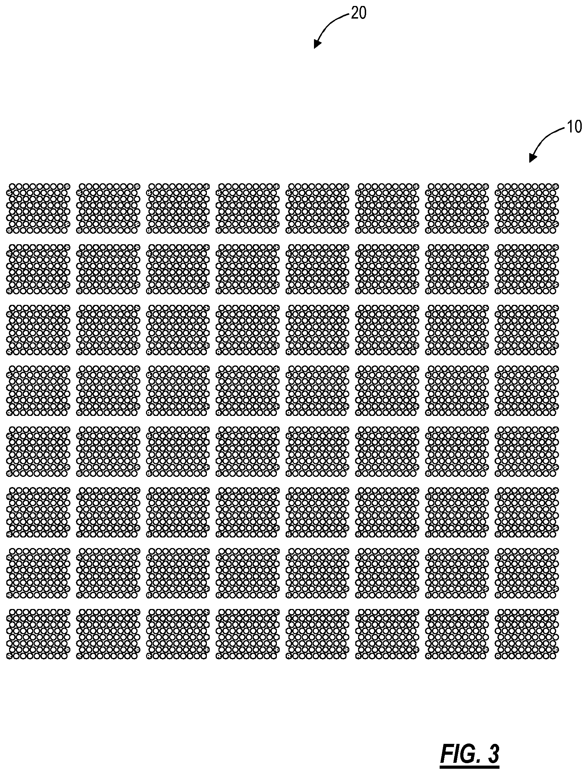

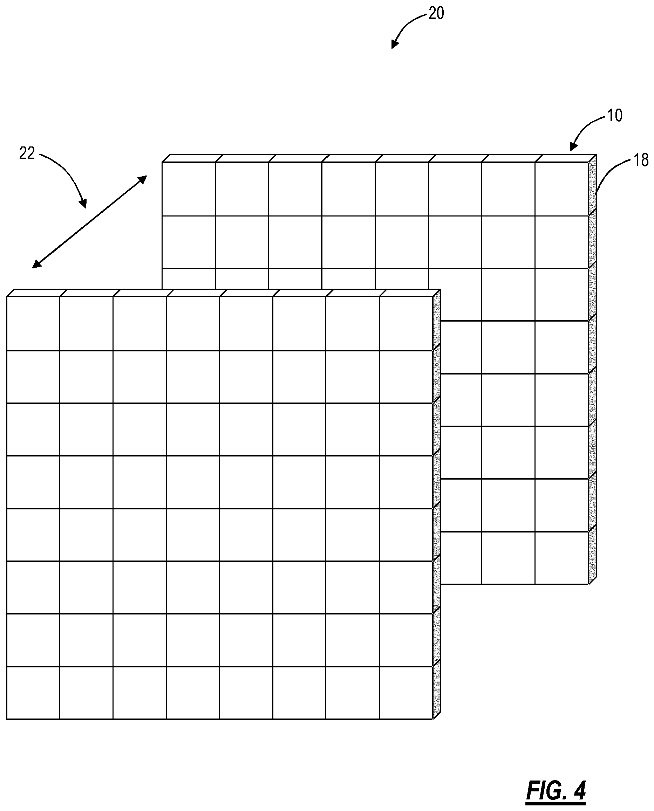

FIG. 1 is a front view of a subassembly 10 illustrating a front portion 12 having traffic ports/mirrors 14 and probe ports/mirrors 16. FIG. 2 is a perspective view of the subassembly 10 illustrating a housing 18 connected to the front portion 12. FIG. 3 is a front view of multiple subassemblies 10 forming a portion of an optical cross connect 20. FIG. 4 is a perspective view of the multiple subassemblies 10 together in the optical cross connect 20. Also, the following descriptions utilize example numbers in terms of ports, subassemblies 10, switch size, dimensions, etc., and those skilled in the art will appreciate this is for illustration purposes and the modularity of the subassembly 10 to build larger optical cross connects 20 contemplates various values, all of which are contemplated herewith.

The subassembly 10 includes a two-dimensional (2D) MEMS mirror array as a component used to build larger optical cross connects 20. Anticipating some degree of failure or misalignment in the components, redundancy during manufacturing is advantageous. For example, 68 element 2D arrays of MEMS mirrors are shown in FIGS. 1-2, e.g., which could be a good building block. If one plans on using the best 64 mirrors, then coupling this with a modular 68 collimator structure would be advantageous. Both have individual mirrors or collimators (e.g., Gradient Index (GRIN) lenses or microlens arrays) having a diameter of approximately 1.8 mm and can be mounted on approximately 2 mm pitch, as shown on the front portion 12. It would be beneficial to increase the mirror/port count slightly to include alignment paths as in the control system design described later herein. One would also like to have a flexible step in manufacturing where the best 64 fibers can be arranged in a splice holder to connect to multifiber connectors like Multi-fiber Push On (MPOs) or others such that all fibers in the connector are active under all successful subassemblies 10. In this example, there are 68 ports 14, 16, with four being designated as probes, and 64 for traffic ports.

As in FIG. 2, each subassembly 10 of collimators or mirrors could be individually connectorized and placed in the housing 18 providing a rugged element for assembly or repair. The housing 18 can utilize a cassette structure where cassettes could then be assembled into an array in a mechanical housing designed for the size of OCS 20 being manufactured.

As in FIGS. 3-4, Each 64-element subassembly 10 could be arranged as a subcomponent. A frame (not shown) could be provided where the subassemblies 10 are connected, in one or two dimensions to form a building block of a 4096-port input stage, assembled in a plane as shown in FIG. 3. For example, the front portion in FIG. 3 could be about 160x135 mm in dimension. Again, FIGS. 3-4 shown an example of a 4096-port switch, but larger or smaller sizes could also be contemplated. Specifically, the variables here include

   (1) the traffic ports 14 in a subassembly 10, e.g., 64 in this example.
   (2) the number of subassemblies 10 in the frame, e.g., 8x8 = 64 in this example.

This leads to a 4096-port switch. As in FIGS. 3-4, the MEMS arrays are assembled similarly on the opposite side of the frame in an array corresponding to the input elements arrangement. That is, the collection of subassemblies can be referred to as an array and there are two opposing arrays forming the optical cross connect 20. There is an optical propagation region 22 between two adjacent sets of subassemblies 10. The optical connections and electrical connections are disposed to the outside of the optical propagation region 22, i.e., inside the housing 18. These connections can be preconnectorized at the subassembly 10 manufacture stage. In this example, a set of 64 subassemblies 10 completes one input or output.

Note, in FIG. 4, the optical cross connect 20 is formed by two opposing arrays. This can be viewed as a so-called "N" shape where the two horizontal lines in the "N" represent the arrays and the diagonal line representing the optical propagation region 22. Other embodiments are contemplated, such as a so-called "W" shape with a fixed set of mirrors in the optical propagation region 22 which is represented by the two middle diagonal lines in the "W" which come together at the fixed mirror. The present disclosure contemplates any arrangement of the two opposing arrays, i.e., they can be said to be relative to one another, whether opposing one another directly or indirectly via fixed mirrors, and the like.

For example, with the "W" shape, the front portion 12 of the assembly 10 can be said to either have ports 14 or mirrors 14. That is, there can be two different physical form factors for the subassembly 10, namely one with the ports 14, forming the input/output to the optical cross connect 20, and one with the mirrors 14, forming intermediate stages for switching light between the input/output assemblies 12 with the ports 14. There can further be a fixed array of mirrors in the optical propagation region 22.

With the "N" shape, the two opposing arrays can include different subassemblies, mixing ones with ports 14 and ones with mirrors 14, such as in FIG. 4. Further, those skilled in the art will recognize the present disclosure contemplates various different arrangements of the subassemblies 10 with their modularity and their active alignment ability.

## Piecewise curved arrays

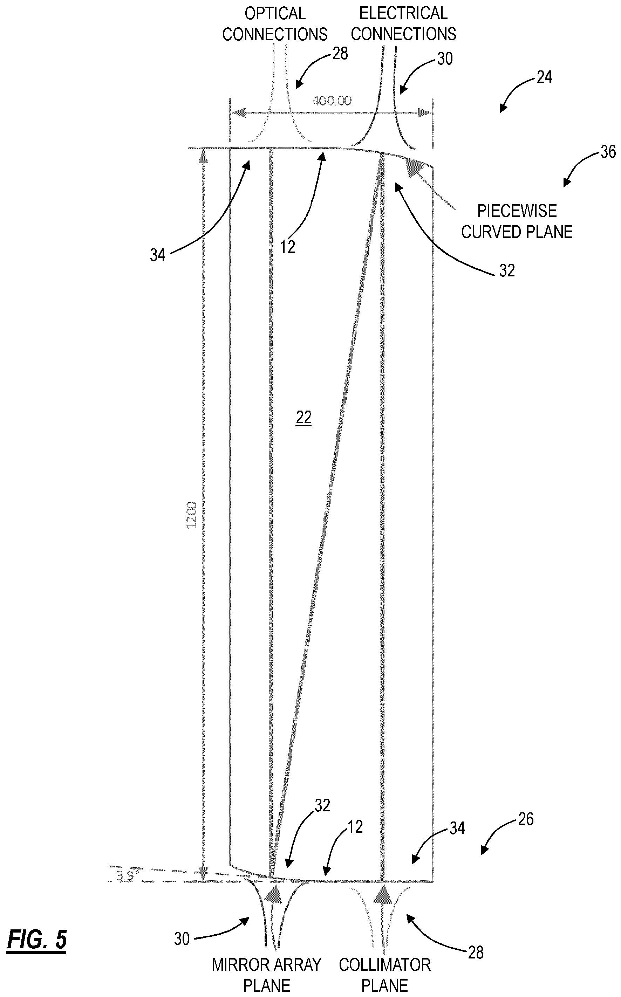

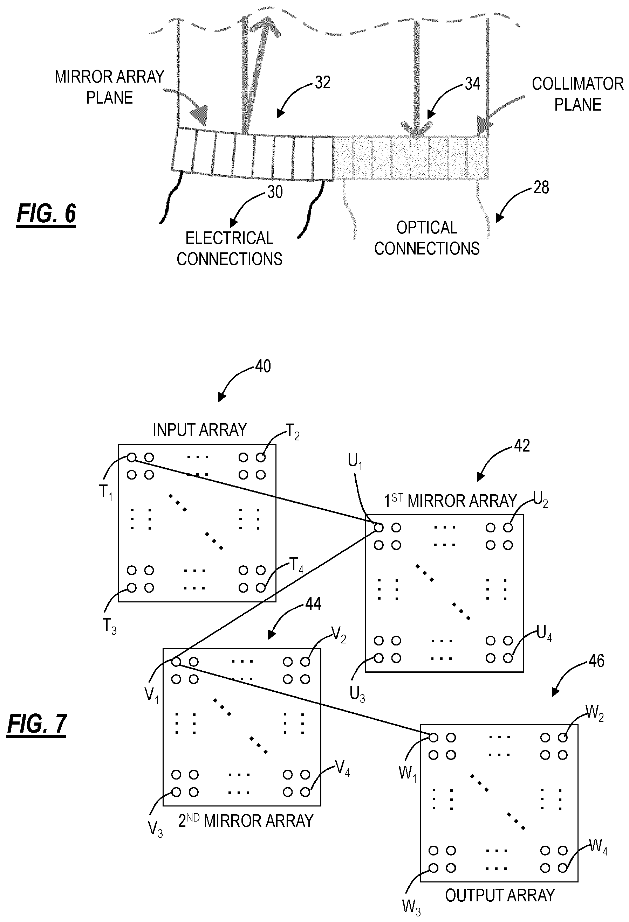

FIG. 5 is a top view on the optical propagation region 22 with two ports 24, 26 shown opposing one another. FIG. 5 also illustrates optical connections 28 and electrical connections 30 which can be disposed in the housing 18, behind the front portion 12. The front portion 12 includes a mirror array plane 32 and a collimator plane 34. Each port 24, 26 includes both the mirror array plane 32 and the collimator plane 34, the mirror array plane 32 includes a tiltable MEMS mirror and the collimator plane 34 includes a port or collimator for receiving a light beam. The optical connections 28 connect to the port or collimator and the electrical connections 30 connect to the MEMS mirror. FIG. 6 is a close-up view of one end of the OCS showing one layer in the 2D stack of input/output and mirror elements.

Note, the embodiment in FIGS. 5 and 6 is where the assemblies 10 oppose one another intermixing ports 14, the collimator plane 34, and mirrors, the mirror array plane 32.

The face on the front portion 12 where the mirrors are mounted could be angled in such a way that the flat reflection off the surface (the mirrors in their rest state and not being actively tilted) is pointed to the center of the opposing array. This is the direction which will couple to the other half of the switch array. Each element of the larger array is adjusted to a nominal angle creating a piecewise curved surface 36 which forms an approximate piecewise paraboloid surface. The piecewise paraboloid surface is much simpler to achieve than typical aspheric lenses or mirrors which need to be ground to a non-spherical shape. Of course, one could also simplify the design by following a portion of a sphere when the distances allow for the misalignment within the tolerances of the control angles of the mirrors.

Each completed stack would then be used with an identical second stack arranged so that the flat faces of the mirror arrays face each other corresponding to the left and right halves of FIG. 5. In this example, an average tilt angle of 3.9 degrees is chosen to minimize the maximum tilt angles used in MEMS mirrors. This allows each mirror element in one plane to address all others in the other so that any input can be directed to any output. The main mechanical assembly can have a size of 33cm x 120cm excluding the space needed for optical fiber and electrical connections. The width of 33cm is set by the width of the input, output and mirror planes of 16.7cm. The length of 120cm is set by the limit of the tilt angle achieved by the mirrors, in this case $\pm 4$ degrees. The vertical dimensions of the box would be approximately the same as the height of the input planes, approximately 13.5cm. The overall propagation distance of the light is approximately 365cm.

## Active alignment

Again, the present disclosure contemplates various different arrangements of the subassemblies 10, e.g., the N or W shapes. A key aspect of any arrangement with the modular subassemblies 10 is the ability to support active alignment of all of the collimators (ports 14) on the input/output stages and the mirrors 14 on the intermediate stages. The following describes active alignment of the mirrors 14.

FIG. 7 is a logical diagram illustrating an example connection from an input array 40, to a first mirror array 42, to a second mirror array 44, to an output array 46. Each array 40, 42, 44, 46 can be a subassembly 10, including the probe ports 14, labeled as $T_1$ - $T_4$, $U_1$ - $U_4$, $V_1$ - $V_4$, $W_1$ - $W_4$.

The opposing subassemblies 10 with the arrays 40, 42, 44, 46 need to be substantially co-aligned. In the following description, the terms arrays mean a collection of the sub-assemblies 10 and planes mean the front portion 12. For an array of input/output optics, this means that all of the elements of that array propagate in the same direction within an acceptable tolerance. This tolerance could be set by the targeting accuracy of the beam spots on a co-designed mirror array set at the appropriate distance. For example, centered within some fraction of the radius of the mirror such that a double bounce in the final configuration results in beam coupling between the input and output with acceptable loss. In this way, it is only the adjustment of the angle of the plane of the subassembly array that is required to guarantee alignment. Angular alignment of the input and output planes 40, 46 can be partially compensated by the tilt corrections in the mirror plane 42, 44 such that passive alignment of the input, output subcomponents is less critical during manufacturing.

For the mirror arrays 42, 44, co-alignment implies that the mirrors have a constant angular relationship to the plane of the array at any specific drive voltage. This allows a predictable offset in the drive voltage to the mirrors of the array to correct for angular deviations caused by manufacturing tolerances and mechanical perturbations during operation.

It should be obvious to those skilled in the art that the optical cross-connect 20 described herein is not inherently directional, i.e., any optical port can be used as an input or an output or as a bidirectional port where light flows in both directions simultaneously. The device is also wavelength agnostic to the extent that the collimators and mirrors act withing a range of performance that results in acceptable loss and crosstalk. For example, it is anticipated that a single device could operate over multiple transmission bands used in telecommunications, for example, O, S, C, L and U bands.

The relative alignment of the mirror planes 42, 44 can be compensated by a feedback controller described below. It should be noted that the method of dithering component positions or angle is applied here as a part of a system designed to employ it and using a path through the optical setup not used for carrying the signal light itself as is usually implemented, i.e., the probe ports 16. One of the benefits of this implementation is that the dither can be large so as to provide a high second harmonic feedback signal which is not possible when used in the signal path elements without imparting a large Insertion Loss (IL) dither on the signal passing through. See, e.g., Goodwin, "Dynamic Alignment of Small Optical Components" Journal of Lightwave Technology, VOL. LT-5, NO. 1, January 1987.

### Active alignment of input and output planes

The alignment of the input and output planes 40, 46 determined the centering of the beams on the mirrors. If this can be achieved passively, that is preferred, however, it may be necessary to provide a means of adjusting or controlling the two tilt axes of these planes. To do so, it would be advantageous to include at least one additional collimator on the input/output submodule and an equal number of quadrant detectors on the mirror plane such that alignment can be measured. Adjusting the tilt axes could be a manufacturing time process wherein the alignment is measured and then fixed using a process like welding, trim and set screws, bonding, adhesive, etc. When using active control feedback, one would use an actuator to adjust the tilt, like a piezoelectric actuator, motor control, etc.

### Probe path dither control system

Starting with an OCS 20 which is arranged in multiple planes 40, 42, 44, 46, being the input plane, output plane, and mirror planes. Traditionally, these OCSs 20 are assembled from the inside out where the mirror planes 42, 44 are fixed to an optical bench and then the input and output planes are aligned with multiple planes already in place such that the entire assembly can be fixed in place. This approach has been reasonable given the size of OCSs currently on the market. These OCSs typically have 10's up to a few 100's of ports.

However, the market is demanding OCSs an order of magnitude bigger, e.g., having more than 1000 ports in one device. A new approach to alignment is required. Furthermore, the use of an optical bench, which is required for fixed, passive alignment limits the propagation of the light to the area above the plane of the bench, further limiting the expansion of the OCS in terms of port count.

The present disclosure provides a different approach to the assembly of OCSs 20 by breaking up the alignment into modular self-referenced planes 40, 42, 44, 46 and then adding a feedback control system to eliminate the need for an optical bench.

The planes 40, 42, 44, 46 are each designed to be assembled, aligned, and calibrated separately, such that the optical elements are aligned to each other in the plane with respect to a stable substrate mounted in the direction substantially perpendicular to the propagation of the light. This provides a degree of mechanical stability in these planes which can be used to guarantee alignment over time and temperature.

There are many concerns in aligning an OCS. The two main jobs are:

(1) Aperture alignment: Align the input and output planes 40, 46 such that the beams are relatively centered on the next plane of mirrors.
(2) Angular alignment: Align the mirrors to each other such that the tilt angles direct the beams from the input fiber to the out fiber with acceptable loss.

Aperture alignment is less sensitive to angular errors than the angular alignment step. The compounding factor with angular alignment is that one needs to be able to predictably control the mirrors in pairs to accurately direct the light between arbitrary pairs of ports.

The present disclosure provides an approach to substantially guarantee interelement alignment stability such that the job of alignment of the entire OCS 20 is to compensate for the angular alignment of the planes 40, 42, 44, 46 with respect to each other. This allows the planes 40, 42, 44, 46 to be roughly aligned with respect to each other in assembly and then use a control loop to compensate for the angular alignment of each plane with respect to each other.

The present disclosure assigns n ports as active alignment ports, i.e., the probe ports 16. In this example, there are 4 ports arranged at the edges of the input and output arrays 40, 46. As few as 1 may be sufficient if compensating only for the unknown tilt of a fixed flat mirror plane 42, 44 like a MEMS substrate or other fixed arrangement where individual mirrors have been calibrated to a fixed flat surface.

In an elliptical arrangement, the probe ports 16 could be at the outside of the ellipse along its perimeter, perhaps outside the useful collimator area, dispersed in angle around the center the ellipse.

Each probe port 16 input can be connected to a laser source which we refer to as a probe or alignment signal. The laser from the laser source may be partially modulated with a fixed modulation percentage as a way to provide accurate power and unique identification even when using Alternating Current (AC) coupled transimpedance amplifier detectors. Each alignment signal is routed through corresponding mirrors in the m mirror planes where m=2 in this example, in FIG. 7.

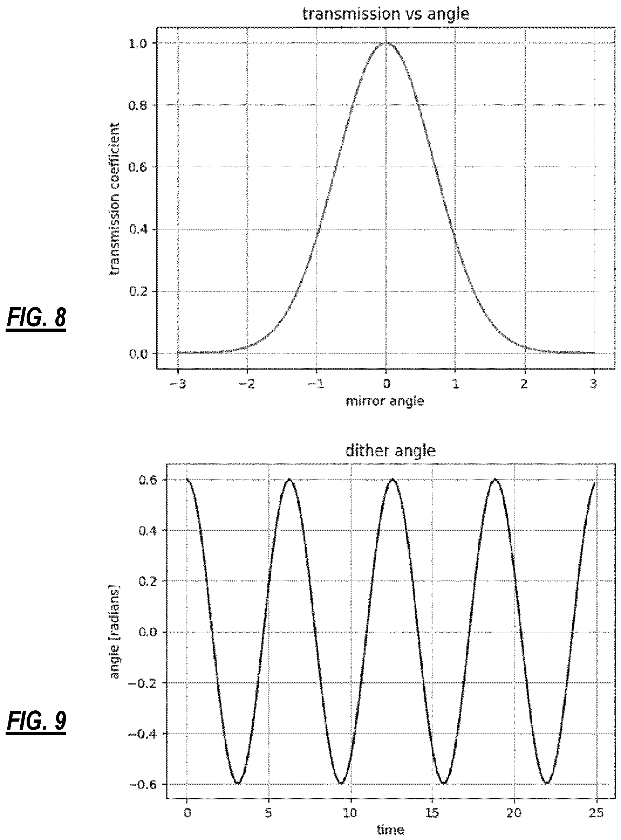

Each alignment mirror is driven with a sinusoidal drive of a different frequency for each of tilt axis of each mirror. Using two, two-axis gimbal mirrors would require four frequencies. A receiver is connected to the output of the fiber collimator at the output plane 46 of each probe port 16 which detects the alignment signal. The transmission coefficient of the signal path depends on the alignment angle of each axis of each mirror as shown in FIG. 8. Next, a sinusoidal dither is applied to the axes of the mirrors. For simplicity, a single axis of dither is shown in FIG. 9.

Imparting a sinusoid to the angle produces a time-varying signal which at the receiver which contains:

(1) For an aligned mirror: large Direct Current (DC) + zero fundamental + large second harmonic.
(2) For a misaligned mirror: smaller DC + large fundamental + smaller second harmonic.

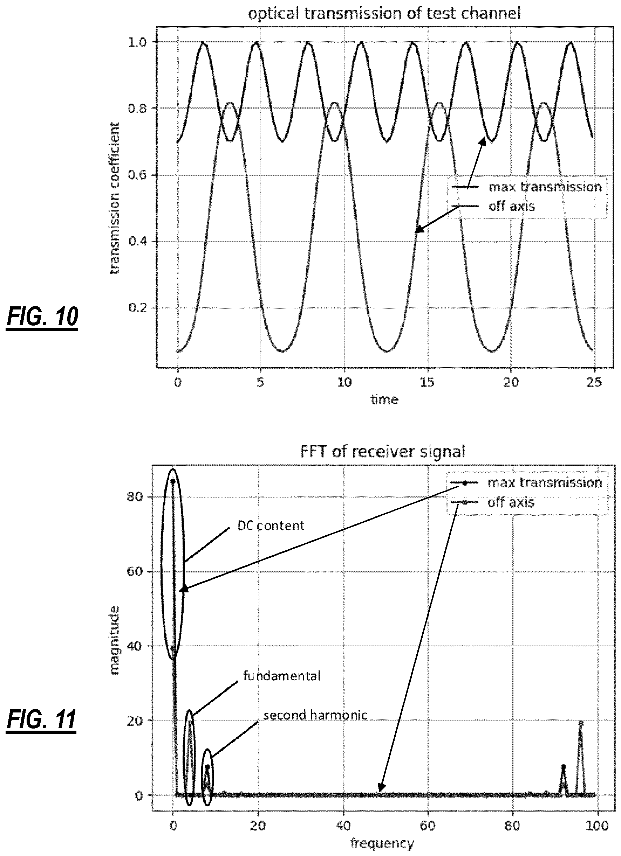

In addition, the phase of the fundamental with respect to the drive indicates which direction the correction for misalignment should be. These two conditions are shown in FIG. 10. To further analyze this signal, a Fourier transform is applied using the Fast Fourier transform (FFT) method well known in signal processing. These results are shown in FIG. 11.

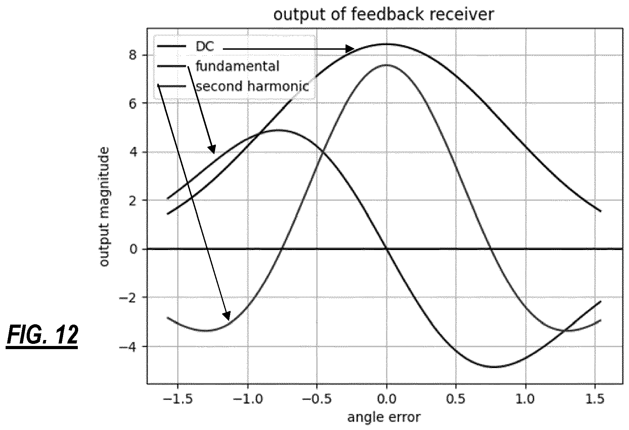

The feedback signals for the control system are derived from the frequency domain, selecting the points corresponding to the average power (so called DC or zeroth frequency point in the FFT), the fundamental (the frequency of the dither) and the second harmonic (2x the frequency of the dither). These points are shown in FIG. 12. Plotting these points over the possible angles of the mirror being controlled we can see how each point varies with the alignment of the mirror.

The control system adds an offset to each angle of each mirror with a target of minimizing the fundamental and maximizing the second harmonic. Combining these two, one can generate the feedback metric to minimize as follows:

$$error = (amplitude\ of\ fundamental)/(amplitude\ of\ second\ harmonic)$$

This offset is then applied to the remaining mirrors to correct for their relative alignment with respect to the calibration of the plane.

### Control accuracy for MEMS mirrors

The requirement for accuracy is the ability to couple from fiber to fiber with low loss. Assuming the control system is capable of finding the center of each mirror and collimator, how much granularity is required to achieve the setting.

| Pointing accuracy calculation | Value | Units |
| --- | --- | --- |
| Position error | 1% | |
| Mirror/collimator size | 1.8 | mm |
| Allowable offset distance | 0.018 | mm |
| Offset to angle | 2.11 | mm/deg |
| Allowable angle offset | 0.01 | deg |
| Full drive angle | 4 | deg |
| Fraction of full drive | 2.14E-03 | |
| Bits required | 8.87152 | |

A 12-bit Digital-to-Analog Converter (DAC) should be sufficient if the Effective Number of Bits (ENOB) including all non-idealities is > 8.9 bits which is commonly achieved in practical circuits.

### Use case

Those skilled in the art will recognize the OCS 20 and associated subassemblies 10 can be used in various applications, such as in a data center, providing optical switching in a spine network. Another application can include switching between Graphics Processing Units (GPUs). The boom in ML/AI training, specifically Large Language Models (LLMs) and other transformers, has resulted in the need for monstrous clusters of GPUs.

### Tolerance analysis

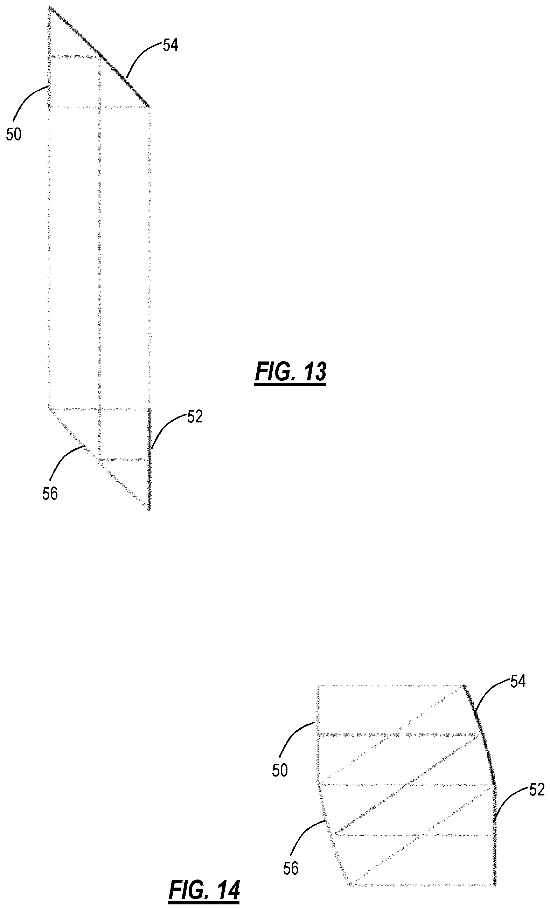

FIG. 13 is a diagram of a periscopic arrangement of collimators 50, 52 and mirrors 54, 56. FIG. 14 is a diagram of a compact arrangement of collimators 50, 52 and mirrors 54, 56. Here, the collimator 50 is the input collimator, the collimator 52 is the output collimator, disposed between the mirrors 54, 56. The periscopic arrangement maximizes distance between mirror arrays, which minimizes span of angular deviation of beams. The compact arrangement has much shorter distance between mirror arrays which results in much bigger span of angular deviation of beams.

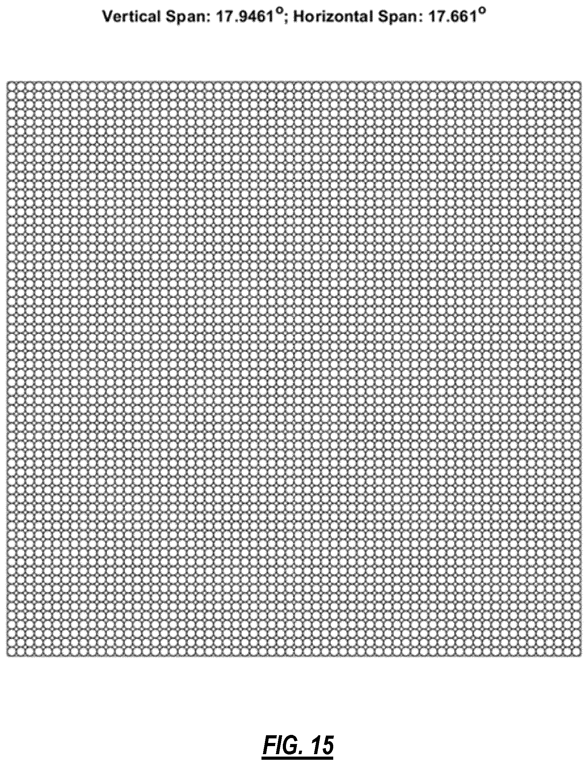

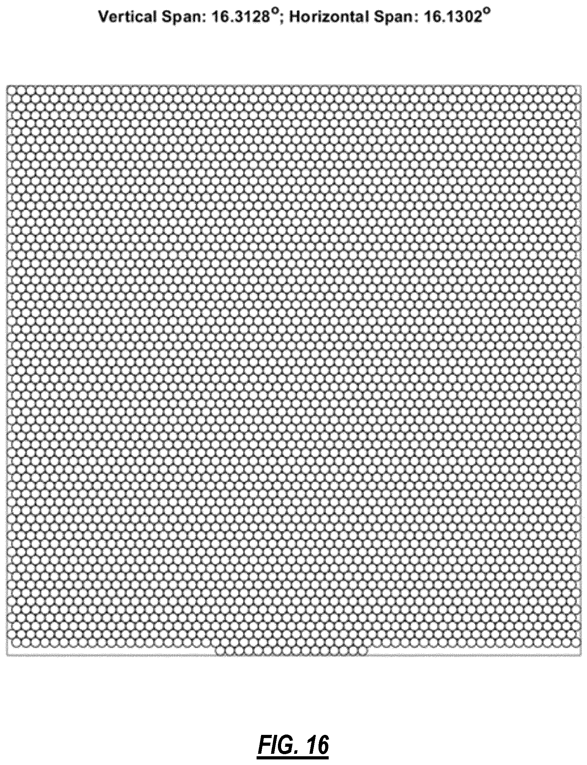

FIGS. 15 and 16 are diagrams of dense packing of collimators. Both FIGS. 15 and 16 include 4096 collimators each with a diameter of about 2.0mm. In FIG. 15, the 4096 collimators are on a 64x64 square grid, and, in FIG. 16, the 4096 collimators are on a 68x60 hexagonal grid with 16 collimators on a bottom 69th row, to balance vertical and horizontal spans. The hexagonally packed collimators imply slightly smaller angular spans of beam deviation.

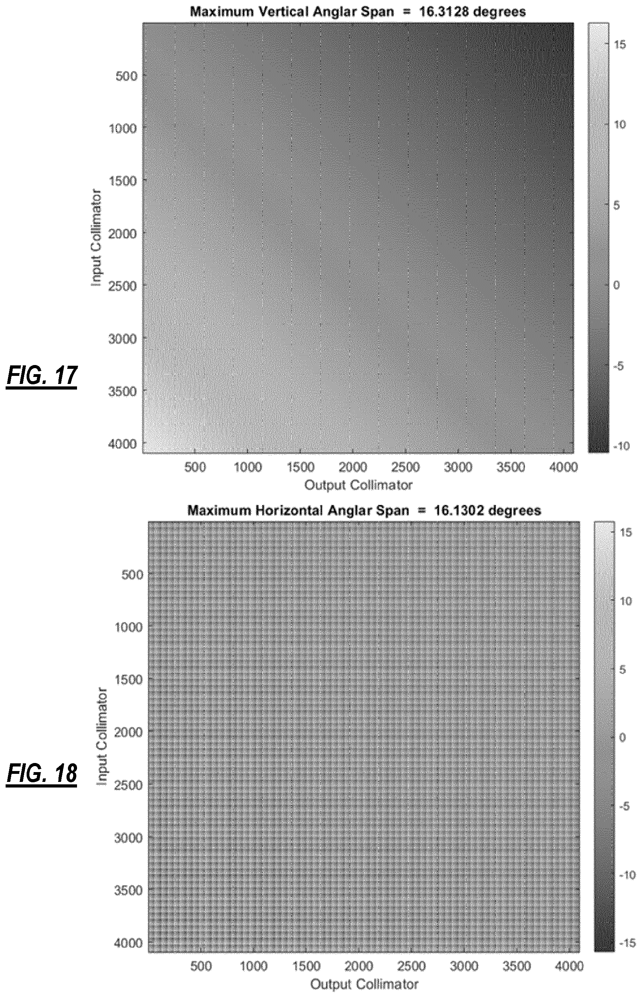

FIGS. 17 and 18 are graphs of vertical and horizontal angular deviation of beams for the hexagonal grid in FIG. 16. Vertical angular beam deviation depicted in FIG. 17 is zero for beams from input collimators 50 in each row being directed to output collimators 52 in the same row, as they are on top left to right bottom diagonal of the plot and color-coded as zero according to shading. FIG. 18 is a plot of horizontal angular beam deviation on the right is a mosaic of 4096 small plots similar to the one on the left.

The maximum angular deviation spans for collimators on both square (FIG. 15) and hexagonal (FIG. 16) grids can be achieved by any standard MEMS mirror with tilt angle swinging $\pm 4.5°$ from nominal position. The problem is that mirrors on flat mounting base plate need to be mounted at an additional tilt to place their nominal position in the middle of the angular deviation span. This could be accomplished simply by mounting MEMS mirrors on inner the surface of a paraboloid, which would (with all mirrors at their nominal position) direct all collimated beams to its focal point at the center of the opposite paraboloidal mirror array. The resulting slightly curved shape of both mirror arrays is noticeable in FIG. 14.

This analysis is based on feasible 2.0 mm pitched collimator arrays at 640 mm distance. The same pitch for a diameter 2.0 mm MEMS mirrors is more problematic, which might require appropriate increase in pitch and subsequent increase in angular deviation spans, for example, doubling the pitch to 4.0 mm would require ~47° angular deviation span, unless the distance between collimator arrays is increased in the same proportion.

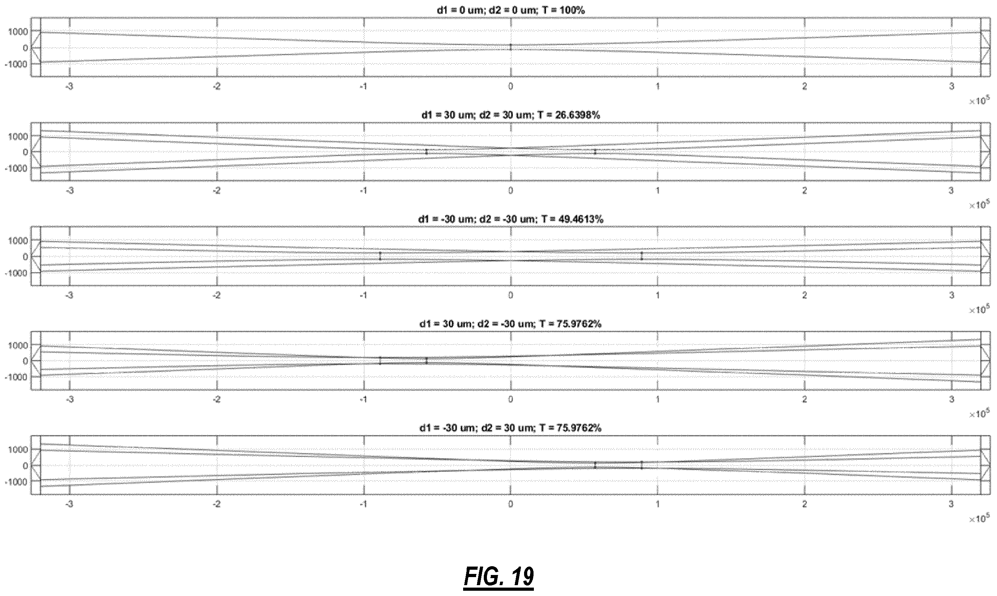

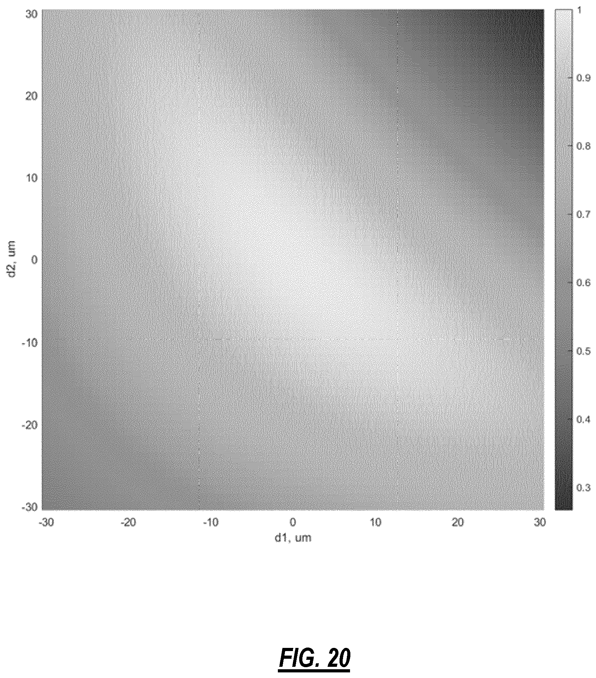

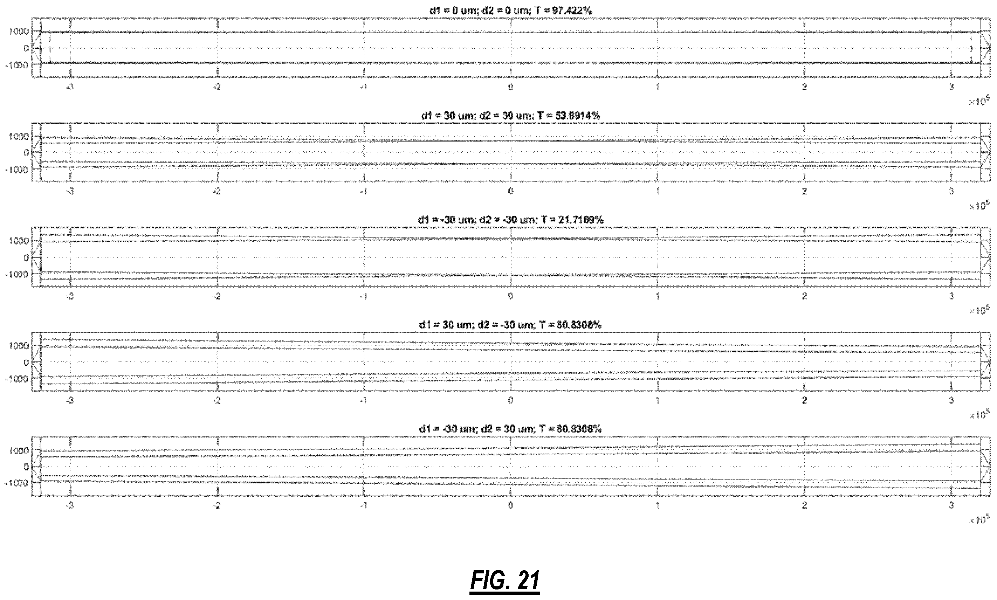

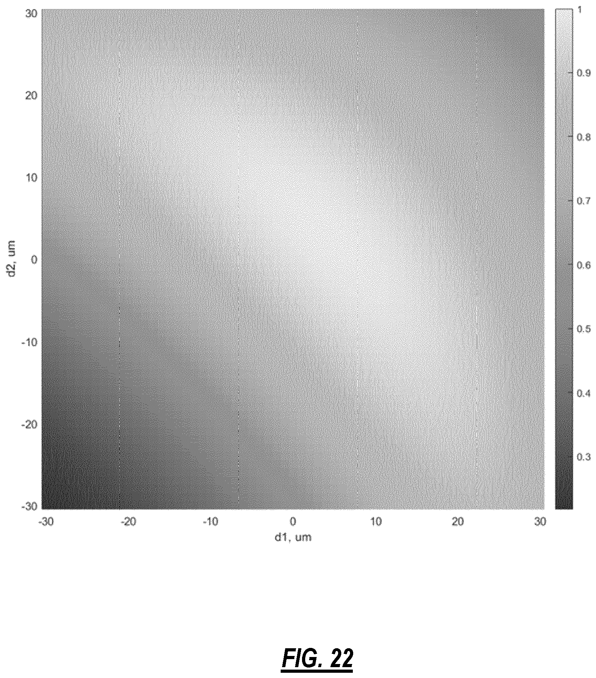

FIGS. 19 and 20 are graphs of coupling efficiency of 1320 nm light in confocal pair of diameter 2.0 mm focusers at 640 mm versus deviations d1 and d2 from prescribed distance between fiber faces and lenses. FIGS. 21 and 22 are graphs of coupling efficiency of 1320 nm light in pair of diameter 2.0 mm collimators at 640 mm versus deviations d1 and d2 from prescribed distance between fiber faces and lenses.

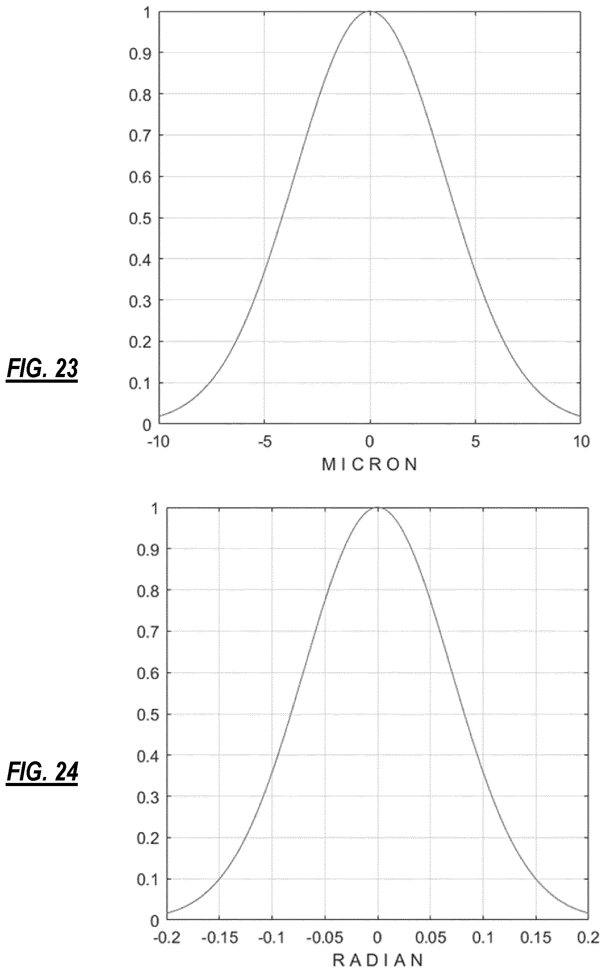

FIGS. 23 and 24 are graphs of coupling efficiency of two 1320 nm Gaussian beams with beam radius $w_o = 3\ \mu m$ versus lateral displacement (FIG. 23) and angular misalignment (FIG. 24). Angular inclination of collimated beam incident on collimating lens is obtained from lateral displacement by dividing it by focal length of the collimating lens. Off-axis displacement of collimated beam incident on collimating lens is obtained from angular misalignment by multiplying it by focal length of the collimating lens.

## Optical cross connect

In an embodiment, an optical cross connect 20 includes a plurality of subassemblies 10 each including one or more of an array of collimators 50, 52 and an array of adjustable mirrors 54, 56, wherein the plurality of subassemblies 10 are configured to modularly scale a size of the optical cross connect, wherein arrays of adjustable mirrors 54, 56 are arranged opposing one another with an optical propagation region 22 in between, and wherein the array of collimators 50, 52 includes one or more probe ports 16 configured to support an alignment signal for active alignment control.

Each of the plurality of subassemblies 10 can include a housing 18 supporting the array of collimators 50, 52 and the array of adjustable mirrors 54, 56, and the housing 18 includes electrical connectors 30 to the array of adjustable mirrors 50, 52 and optical connections 28 to the array of collimators 50, 52. The plurality of subassemblies 10 can include a first set of subassemblies and a second set of subassemblies opposing the first set of subassemblies with the optical propagation region 22 in between. Each subassembly of the plurality of subassemblies 10 can include a number of collimators 50, 52 and a number of adjustable mirrors 54, 56, such that an overall size of the optical cross connect is based on a number of the plurality of subassemblies 10. The number of adjustable mirrors 54, 56 can include redundancy where some of the adjustable mirrors are unused.

The array of collimators 50, 52 and the array of adjustable mirrors 54, 56 can be such that each collimator is disposed next to a corresponding mirror, with the mirror in a curved plane relative to the collimator. Each subassembly 10 of the plurality of subassemblies can include a front portion 12 having the array of collimators 50, 52 and the array of mirrors 54, 56 thereon. The active alignment control can include compensating for angular alignment between two different subassemblies 10 each with the array of mirrors 54, 56, such that tilt angles support an acceptable loss between two collimators 50, 52. The one or more probe ports 16 can include at least three ports at edges of the array of collimators 50, 52.

The active alignment control can include a laser connected to a probe port 16 on a first array of collimators 50 and configured to transmit the alignment signal; a receiver connected to a probe port 16 on a second array of collimators 52 and configured to receive the alignment signal, after the alignment signal traverse a pair of mirrors 54, 56; and circuitry configured to measure angular offsets of the pair of mirrors 54, 56. The circuitry can be further configured to apply a dither to the pair of mirrors 54, 56, measure the alignment signal at the receiver over time based on the dither, and determine feedback for the pair of mirrors 54, 56 based on the measured alignment signal. The circuitry can be further configured to measure the angular offsets of the pair of mirrors 54, 56 in two different arrays of adjustable mirrors, and cause adjustment of all mirrors in the two different arrays of adjustable mirrors based on the measured angular offsets of the pair of mirrors 54, 56. The size of the optical cross connect can be at least 1000 ports.

## Process

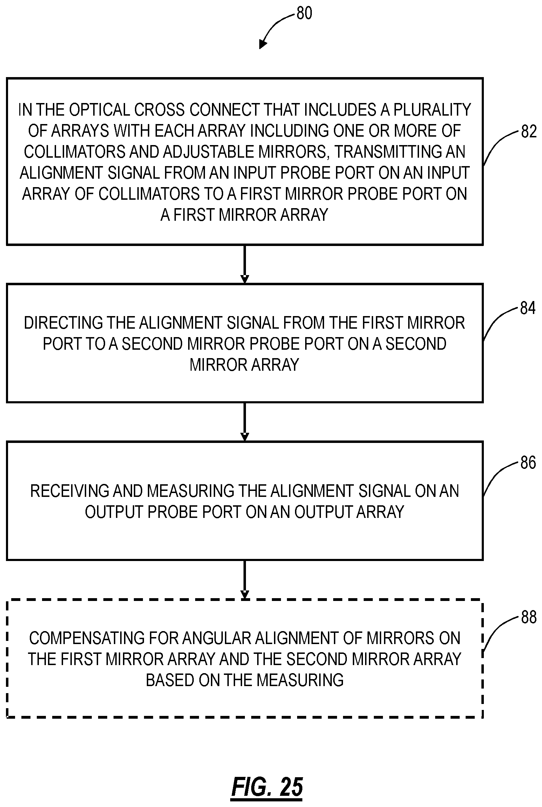

FIG. 25 is a flowchart of a process 80 of aligning an optical cross connect 20. The process 80 includes, in the optical cross connect that includes a plurality of arrays with each array including one or more of collimators and adjustable mirrors, transmitting an alignment signal from an input probe port on an input array of collimators to a first mirror probe port on a first mirror array (step 82); directing the alignment signal from the first mirror port to a second mirror probe port on a second mirror array (step 84); and receiving and measuring the alignment signal on an output probe port on an output array (step 86). The process 80 can also include compensating for angular alignment of mirrors on the first mirror array and the second mirror array based on the measuring (step 88).

The process 80 can also include applying a dither to the first mirror port and the second mirror port; measuring the alignment signal over time based on the dither; and determining feedback for mirrors on the first mirror array and the second mirror array based on the measured alignment signal. The dither can be sinusoidal, causing different characteristics in the received alignment signal based on whether or not the first mirror port and the second mirror port are aligned.

The process 80 can also include measuring angular offsets of first mirror probe port and the second mirror probe port; and causing adjustment of all mirrors in the first mirror array and the second mirror array based on the measured angular offsets. The input array of collimators and the output array of collimators each can include at least four ports at edge collimators. The optical cross connect can include a plurality of subassemblies each including an array of collimators and an array of adjustable mirrors.

## Example arrangements

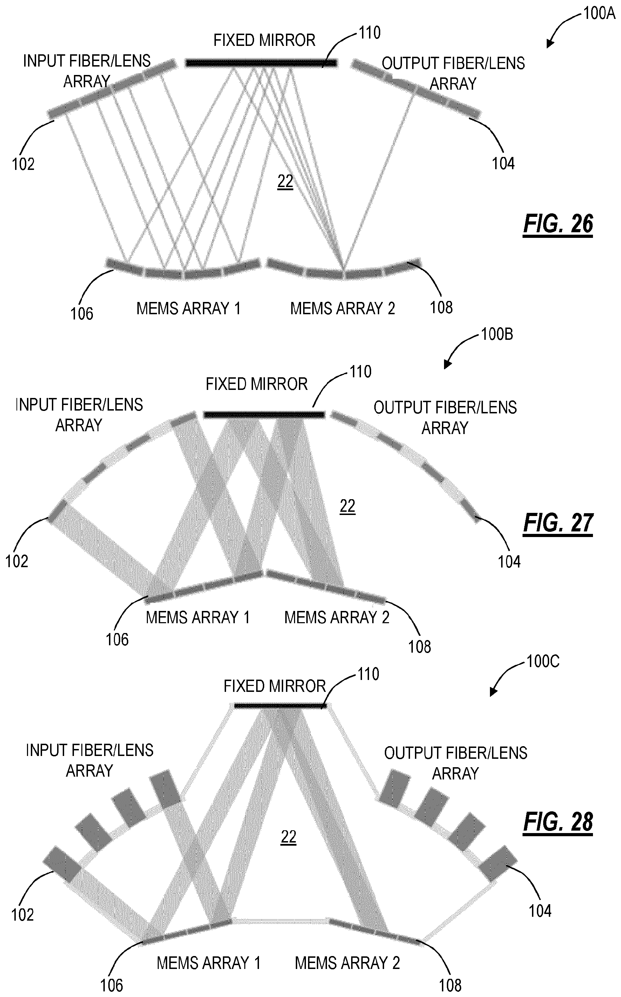

FIGS. 26 - 28 illustrates three different arrangements 100A, 100B, 100C of input/output arrays 102, 104, MEMS arrays 106, 108, and fixed mirrors 110, arranged relative to one another with the optical propagation region 22. All of FIGS. 26 - 28 are top views, looking down on the optical propagation region 22, illustrating arrangement of the arrays 102, 104, 106, 108 and the fixed mirrors 110. Of note, this corresponds to the "W" architecture. Each of the arrays 102, 104, 106, 108 can include one or more of the subassemblies 10, e.g., the arrays 102, 104 being subassemblies 10 with the ports 14 (collimators) and the arrays 106, 108 being subassemblies 10 with the mirrors 14. Again, the size of the different arrangements 100A, 100B, 100C can be based on the number of subassemblies 10. Further, the subassemblies 10 can be mounted in a rack, chassis, shelf, etc., and are field replaceable. The fixed mirrors 110 can be fixed, namely mounted in the rack, chassis, shelf, etc., as well as being a third type of subassembly 10 that is field replaceable.

In each of the different arrangements 100A, 100B, 100C, each input/output array 102, 104 is a 2D arrangement of fibers and lenses. The view in the diagram is top down such that the fibers would be connected on the top of the gray planes in the diagram and the light leaves/enters the arrays 102, 104 on the faces which are facing toward the MEMS array 1 106 and MEMS array 2 108 respectively. The two dimensions of each fiber/lens array are vertical (out of the page) and horizontal (along the face of the plane as drawn).

The arrangement 100A includes semi-parabolic planes for the MEMS arrays 106, 108. The arrangement 100B includes semi-parabolic planes for the input/output arrays 102, 104, providing more space for mechanically adjustable input/output arrays 102, 104 (discussed herein). This also results in the MEMS arrays 106, 108 having a single tilt angle which will help packaging them together. The arrangement 100C includes moving the MEMS arrays 106, 108 apart to allow longer propagation between them.

## Port alignment mechanism

In addition to mirror alignment described above, another challenge in creating MEMS-based free-space optical devices, especially those with many input and output fibers, is the bulk alignment of the input/output collimators to the MEMS arrays. The relative alignment of the MEMS planes can be compensated for using test-ports and dithers, as described herein, however, this cannot be done for the input/output planes. In typical configurations, the alignment of the input to the first mirror plane and the output to the second mirror plane is just as critical as the mirror-to-mirror alignment. However, it is not an angular problem, it is aligning the spots to the mirrors and how that is maintained over life.

The normal solution to the problem of input/output alignment is to do careful alignment and measurements during the manufacturing phase. The entire optical chain is assembled but not fixed in place. Position and angular control stages are used to move the input and output planes in a search pattern to find the optimal coupling from end to end of the optical system. This is a multi-step process which is iterative, i.e., when one portion is close to optimal, the next portion is moved closer to its optimal and back and forth in such a way that the overall system is optimized. Then the components are fixed in place through welding or adhesives being cured and the system allowed to relax. Any further movement is potential degradation of the optical performance and must be guarded against in the specification of the device and by careful mechanical design with additional components provided for rigidity, temperature compensation, etc.

In the different arrangements 100A, 100B, 100C, examples of light beams are shown leaving the input fiber/lens arrays 102, 104 and heading toward the MEMS arrays 106, 108. For each input fiber there is a corresponding MEMS mirror element. To couple with low loss, the light from each input must strike the MEMS mirror in the middle without spilling over the edge.

The present disclosure solves this problem by active alignment using an alignment feature on the MEMS device, described above, and using corresponding probe port in the input and output arrays 102, 104, described as follows.

**Detectors on the MEMS devices**

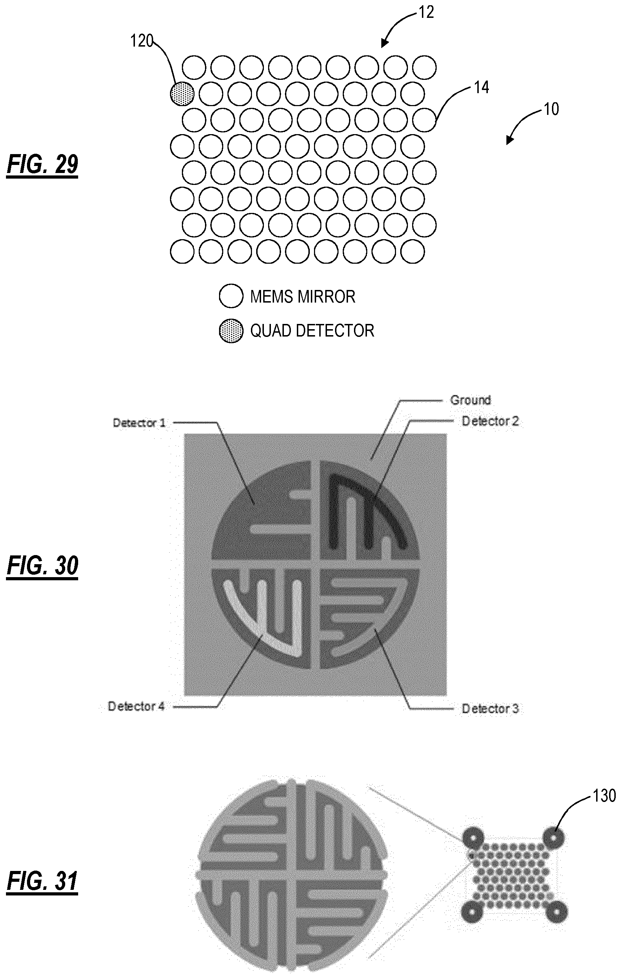

FIG. 29 is a front view of the subassembly 10 illustrating a front portion 12 having MEMs mirrors 14 and a quad detector 120. FIG. 20 illustrates the subassembly 10 front portion 12 for the input and output arrays 102, 104. In particular, the present disclosure includes integrating quadrant detectors 120 on the MEMS devices themselves. The quadrant detectors 120 are the so-called Metal-Semiconductor-Metal (MSM) type of photodetector manufactured directly on a silicon substrate. This would replace one of the mirror locations with a quadrant detector 120 as shown in FIG. 29.

The normal challenge with photodetectors on silicon substrates is that the material is transparent to the wavelengths typically used in communications systems, e.g., at 1500nm, or 1310nm. As such, the present disclosure has the photodetector (for the quadrant detector 120) operate at 850nm, or any wavelength in the absorption/detection band of intrinsic silicon. In this way, the quadrant detector 120 is compatible with the normal processes used to manufacture the MEMS elements, i.e., the MEMS mirrors 14. In fact, MSM photodiodes require only a metallization layer in a specified pattern, and connections to the detector electrodes rather than special materials or dopants. MSM detectors are often not used because of poor quantum efficiency due to the shadowing effect of the surface metal electrodes. However, this application does not require high responsivity and benefits from the tightly controlled geometry offered by the patterning of the electrodes making MSMs an ideal choice for this application.

FIG. 29 shows the corresponding input or output fiber/lens array which has a quadrant detector 120 port dedicated to 850nm light. This port can be created using the same microlens and provided that a special fiber with single mode operation at 850nm or the chosen wavelength for alignment is used for this port. So long as the 850 nm fiber has a numerical aperture (NA) close to that of the fiber/wavelength combination used for the traffic ports, and the material of the microlenses had a moderate material dispersion, the light from the 850 nm port will be substantially collimated like the traffic bearing ports. Even an imperfectly collimated beam will have an intensity pattern which can be used for alignment making the design insensitive to small deviations of the NA and focal length of the lenses.

FIG. 30 is a diagram of an example arrangement of the MSM quadrant detector 120 design. The MSM quadrant detector 120 includes four detectors approximately dimensioned the same as a MEMS mirror 14 on the front portion 12, on a ground layer metallization that is required to eliminate off-detector current generation. There can be an infrared (IR) cover to eliminate visible light.

Due to the substantially Gaussian beam intensity profile of the light in a collimated beam from a fiber, the light impinging on the quadrant detector 120 will be sensitive to the alignment of the light to the center of the detector. Essentially, by adjusting the angular and position alignment of the input/output planes to their corresponding MEMS array, the feedback from each of the four detectors of the quadrant detector 120 is maximized and equalized. This, in turn, guarantees good alignment.

It should be noted that the circuitry that each quadrant detector 120 is connected to must also provide a voltage bias. MSM photodetectors require a voltage bias to produce a current when the hole-electron pairs are produced in the bulk material. Without a bias, these hole-electron pairs recombine naturally, but in the presence of a bias voltage they are swept in opposite directions toward the electrodes and thereby produce a current proportional to the intensity of the detected light. Those skilled in the art will appreciate while described as a quadrant or quad detector, other embodiments are possible include less detectors, e.g., a tri-detector, etc.

In addition, using an amplitude modulation on the probe signal could help differentiate the probe signal from background light that may be present. This modulation could be a specific frequency, or a special modulation code, for example, which would allow the detector circuitry to lock in on the signal of interest and filter out the background noise.

FIG. 31 is another arrangement with four quadrant detectors 120 at four corners of the matrix effectively forming a large, distributed quadrant PD shown at locations 130.

In one embodiment the control and feedback mechanisms are used during manufacturing for initial alignment. The alignment can be done independently for the input and output fiber arrays rather than the complex coupled process used when doing end to end alignment.

In another embodiment the feedback from the MSM detectors is used during operation. In this embodiment, the feedback is augmented with a means to control the angular alignment of the input/output arrays. Using the feedback alignment is maintained over life, temperature, and even vibration if the feedback and actuation path has sufficient bandwidth. Adjustment of the input/output angles could be achieved through piezoelectric actuation or other electro-mechanical means.

**Mechanical form factor - subassembly with collimator ports**

Physically, the optical cross connect 20 is realized with a plurality of subassemblies 10, installed in the field, in a chassis, rack, shelf, etc. Again, each subassembly 10 includes the housing 18 which is field replaceable. Also, there can be different variants for the subassemblies 10, namely one for the input/output array 102, 104, and one for the MEMS array 106, 108. For alignment, the MEMS array 106, 108 with the corresponding MEMS mirrors can be adjusted as described herein. That is, there is an ability to control each MEMS mirror. For the input/output array 102, 104, the collimator ports are not adjustable as is a MEMS mirror, but for realizing a field upgradeable, modular optical cross connect 20, there is a need to provide active alignment on the entire path (see FIG. 7). That is, the collimator ports are fixed and not adjustable as is a MEMS mirror. However, the present disclosure includes a mechanical form factor that supports physical adjustment of its location as part of a larger optical cross connect 20 to support alignment of the collimator ports.

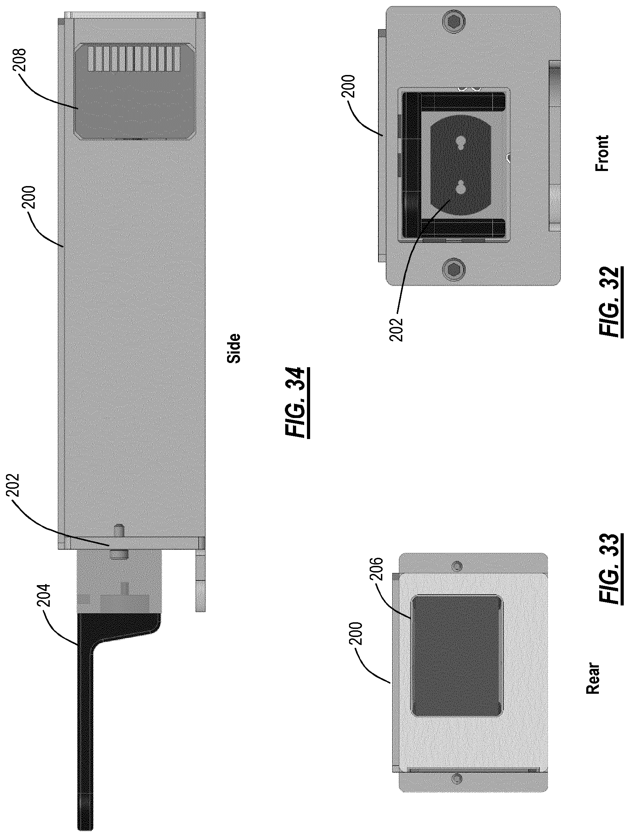

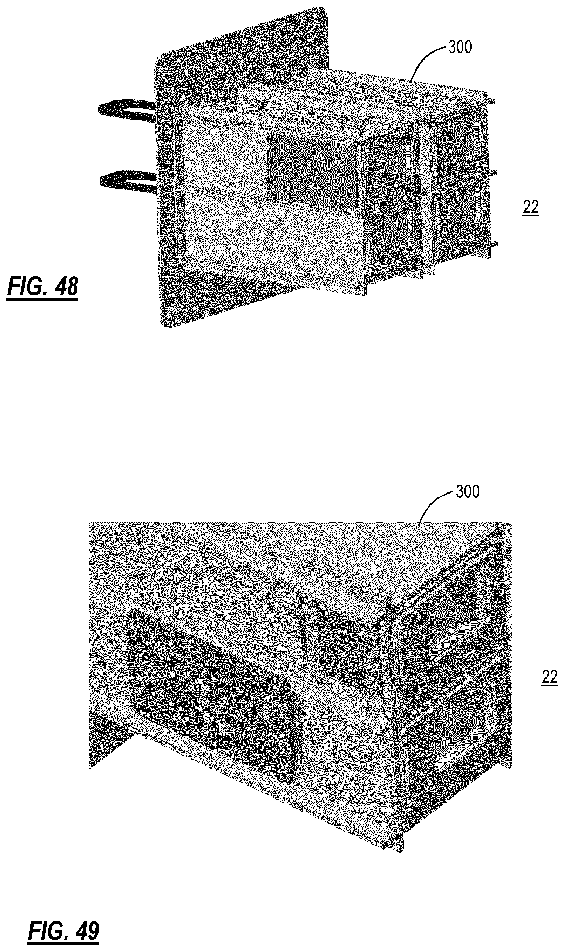

FIGS. 32 - 49 are diagrams of an example form factor 200 for a subassembly 10 with ports 14 for the input/output array 102, 104, where the form factor 200 includes alignment circuitry configured to align/adjust the front portion 12 based on the quadrant detector 120 feedback. That is, the object here is to slightly move the subassembly 10 to align the ports 14 on the front portion within a larger optical cross connect 20, based on the quadrant detector 120 feedback.

FIGS. 32 - 34 are front views (FIG. 32), rear views (FIG. 33), and side views (FIG. 34) of the form factor 200. The front view includes an interface 202 which connects to a cable assembly 204, containing a plurality of fibers for the ports 14. The fibers connect to an optical array 206 in the rear of the form factor 200, which is the front portion 12 facing the optical propagation region 22 of the optical cross connect 20. Of course, a practical embodiment of the optical cross connect 20 can include a plurality of the form factors 200, to expand the size as needed. The front portion and the interface 202 is visible to a user. Also, the form factor 200 can include a control Printed Circuit Board (PCB) for data and power connectivity within the optical cross connect 20. Here, this can provide power to the quadrant detector 120 and the alignment circuitry, as well as provide data feedback to the optical cross connect 20 based on the quadrant detector 120 and the alignment circuitry.

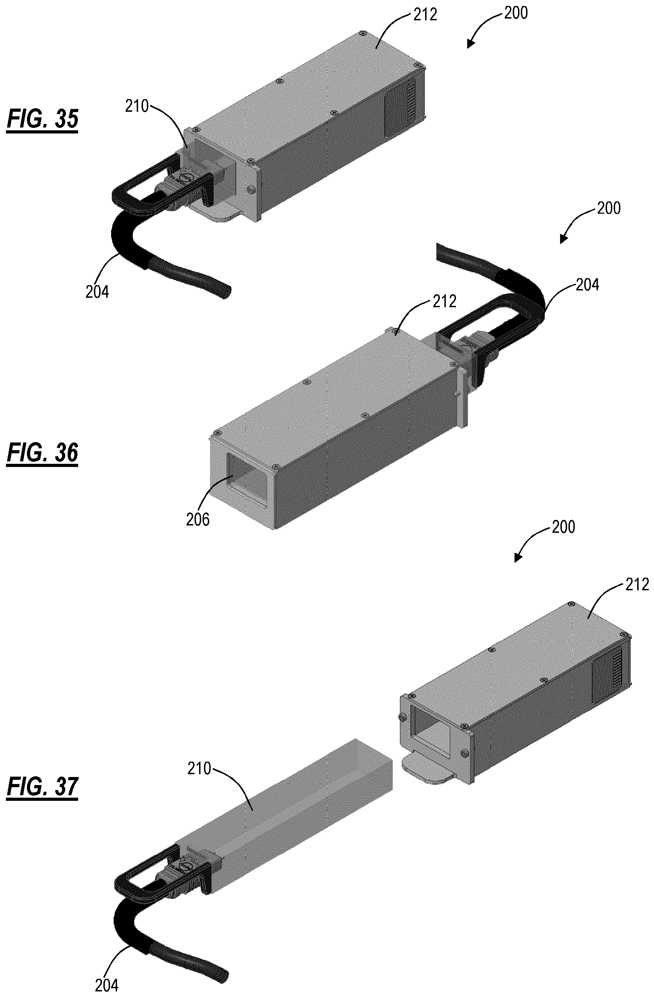

FIGS. 35 - 37 illustrate the form factor 200 with an optical module 210 and a housing module 212, in an example embodiment. FIG. 35 is a perspective view with the optical module 210 connected to the cable assembly 204 and included in the housing 212. FIG. 36 is an opposite perspective view from FIG. 35. FIG. 7 is a perspective view with the optical module 210 connected to the cable assembly 204 and removed from the housing 212. In an embodiment, the optical module 210 latches into the housing 212, and both are Field Replaceable Units (FRU). In another embodiment, the optical module 210 is installed in or part of the housing 212, such that the optical module 210 is non-FRU, while the housing 212 with the optical module 210 included is FRU.

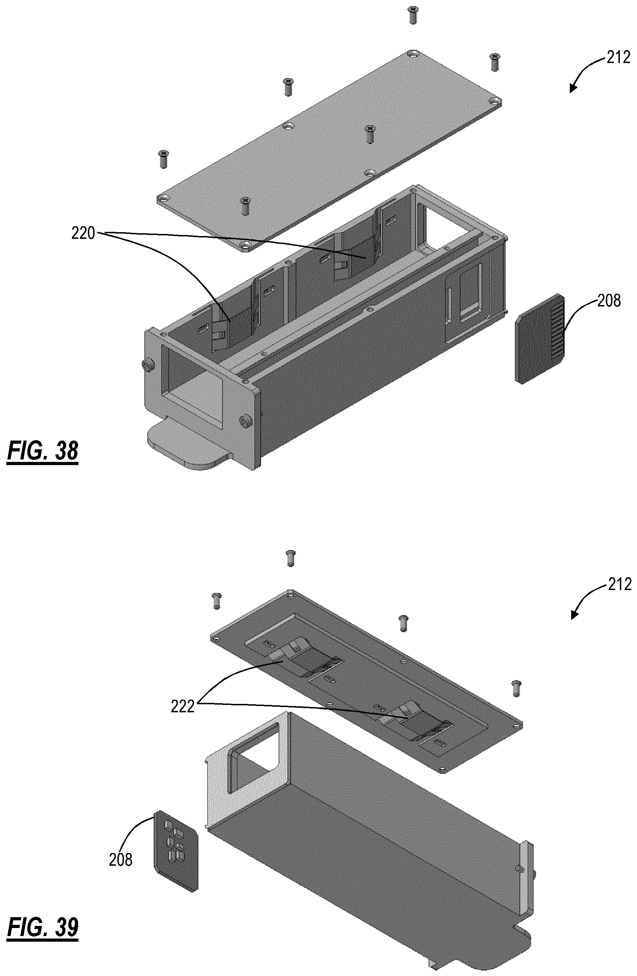

FIGS. 38 - 39 are two opposing exploded perspective views of the housing 212. The housing 212 includes horizontal plane springs 220 (shown in FIG. 38) and vertical plane springs 222 (shown in FIG. 39). The horizontal plane springs 220 and the vertical plane springs 222 are located in the interior of the housing 212 abutting the optical module 210 and configured to provide tension in either or both the horizontal and vertical planes, to provide slight spatial adjustment of the optical module 210, based on feedback from the quadrant detector 120. The terms horizontal and vertical plane are with respect to the optical propagation region 22. Thus, the horizontal plane springs 220 and the vertical plane springs 222 can be used to slightly move the ports 14 for collimator alignment.

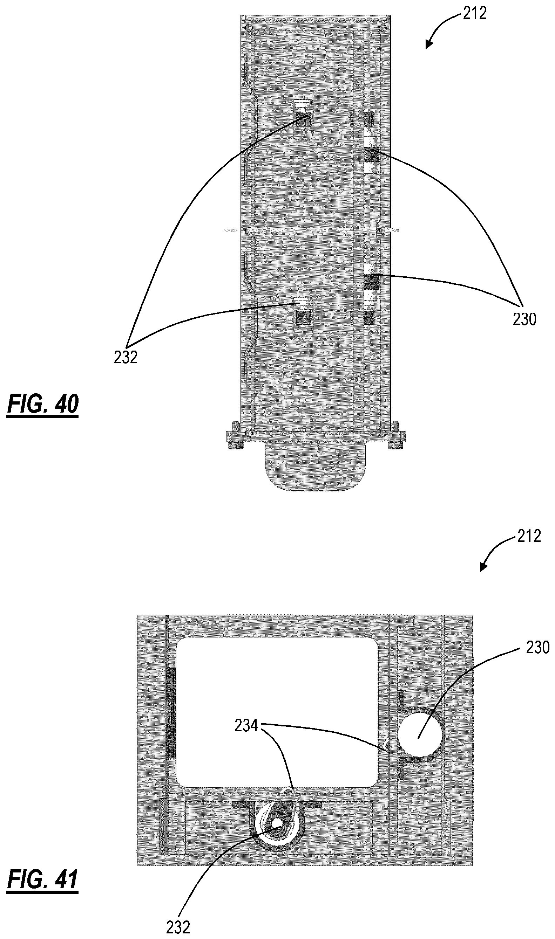

FIGS. 40 - 41 are a top view (FIG. 40) and a front cross-sectional view (FIG. 41) of the housing 212, illustrating alignment control via horizontal plane control 230 and vertical plane control 232. The horizontal plane control 230 and vertical plane control 232 can be any mechanical mechanism, such as a motor, hydraulic components, pneumatic components, etc. The horizontal plane control 230 and vertical plane control 232 each include actuator control points 234 which make contact with optical module 210 to apply a force thereto for alignment. The horizontal plane control 230 and vertical plane control 232 can each apply a force via the actuator control points 234, along with the horizontal plane springs 220 and the vertical plane springs 222, there can be active alignment control of the optical module 210 to provide slight movement of the ports 14.

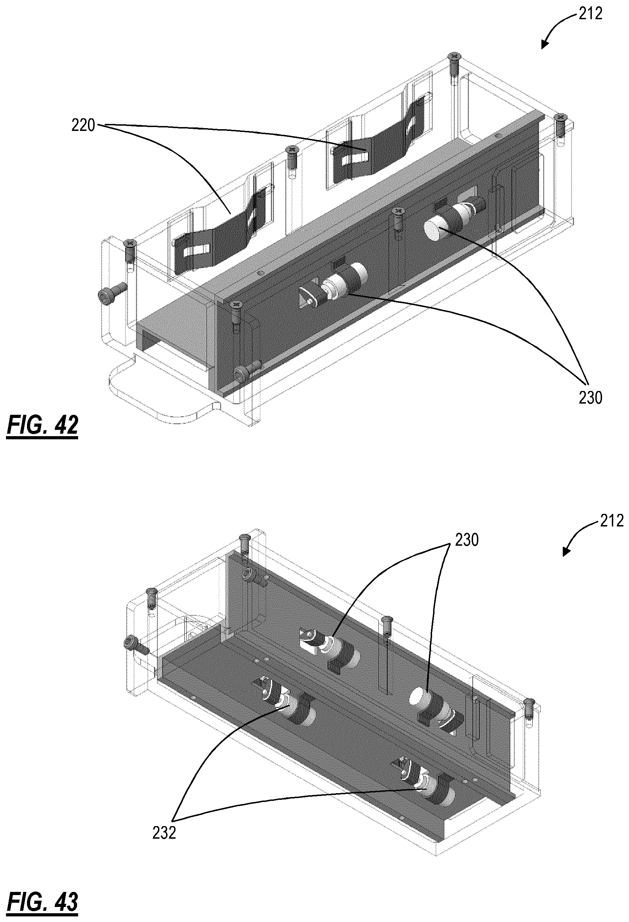

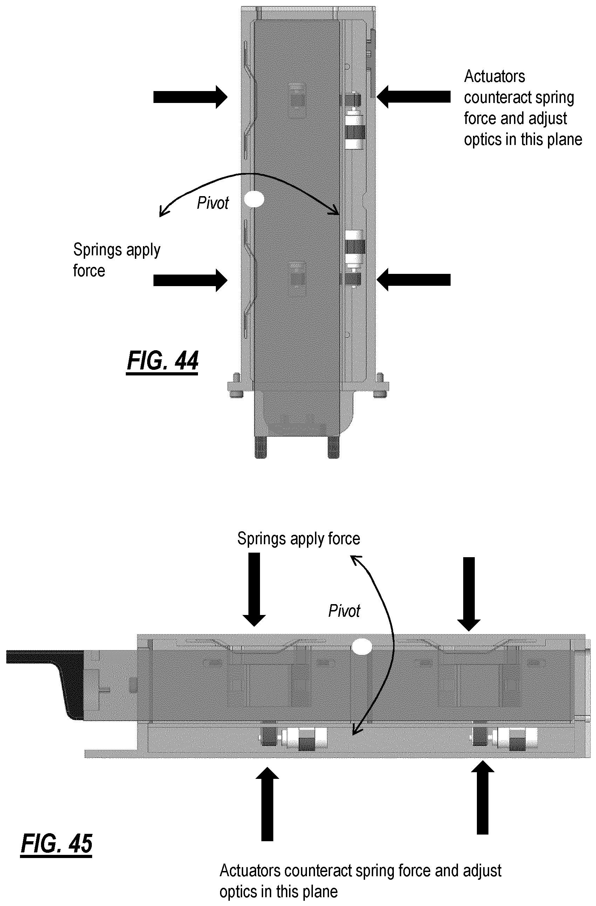

FIGS. 42 - 43 are two opposing wireframe perspective views of the housing 212, illustrating the horizontal plane control 230 and vertical plane control 232 and the horizontal plane springs 220. FIGS. 44 - 45 are a top view (FIG. 44) and a side view (FIG. 45) of the housing 212 illustrating application of force for active alignment.

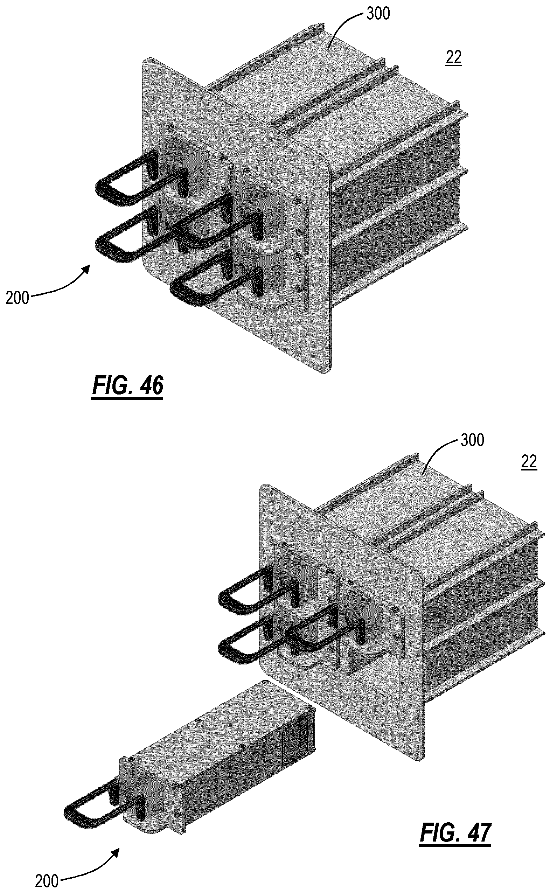

FIGS. 46 - 49 are various perspective views of an assembly 300 that is part of an optical cross connect 20 that supports four of the form factors 200. Again, the form factors 200 are FRU within the assembly 300. In this example, there can be four assemblies 10 (FIG. 46) which can be removed (e.g., see FIG. 47 with one assembly removed therefrom). Of course, those skilled in the art will recognize various different sized assemblies 300 are contemplated. The assembly 300 is rack mounted or packaged in some manner in the optical cross connect 20.

Of note, the example form factor 200 looks and has a similar shape/size to pluggable optical modules. As is known in the art, pluggable optical modules are compact, hot-swappable devices used in networking hardware to enable data transmission over optical fiber. In a similar sense, the example form factor 200 can make a larger optical cross connect 20 based on various subassemblies 10 including subassemblies 10 with ports 14 in the form factor 200. Those skilled in the art will recognize there can be a similar form factor for the subassemblies 10 with MEMS mirrors 14. Thus, the optical cross connect 20 can be field installed and upgradeable based on the number of subassemblies 10 used.

### In-service dither-free active alignment

In another embodiment, the present disclosure provides a method for in-service, dither-free active alignment that can be applied to the various high port count optical cross connect (OCS) designs discussed herein, as well as to other OCS configurations. Dither-free active alignment eliminates the need for traditional dithering signals, i.e., small, intentional disturbances used to maintain alignment, by employing a direct feedback mechanism based on real-time measurements of alignment quality. These measurements can originate from dedicated sensors, optical power detectors, or other monitoring components, thereby providing precise alignment information without introducing additional noise or mechanical oscillations.

For illustration, consider a high port optical cross connect formed according to arrangement 100C shown in FIG. 28. In this arrangement, multiple mirror planes, as well as distinct input and output planes, can each be monitored and actively controlled. Because the alignment mechanism operates in real time, any slight deviation due to thermal expansion, vibration, or component aging is immediately detected and corrected. This active adjustment is accomplished through a control loop that computes the necessary angular or translational offsets for each subcomponent to maintain optimal optical coupling. As a result, the system remains fully operational during alignment corrections; there is no service interruption, and the overall optical performance is enhanced by the continuous, precise control of beam paths.

Moreover, the modular design of arrangement 100C facilitates independent manufacturing, testing, and replacement of subcomponents without compromising the entire system. By integrating dither-free active alignment into this modular approach, the system can maintain high reliability and reduced downtime, even when individual modules are serviced or replaced. The underlying principles of this in-service alignment technique can similarly be adapted for other OCS configurations, ensuring its broad applicability in various high port count switching environments.

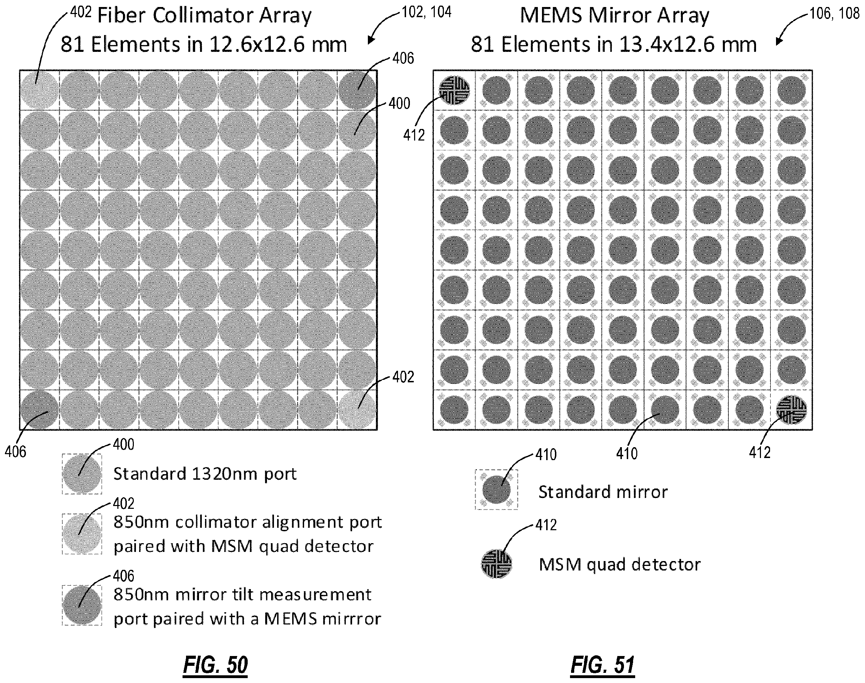

FIG. 50 is a diagram of example fiber collimator arrays 102, 104 in the arrangement 100C, each represented as a grid of circular apertures. In this context, a collimator port is generally a small assembly, often incorporating a lens or lens system, that couples light from an optical fiber into a substantially parallel (collimated) beam. This collimation ensures minimal beam divergence and facilitates accurate free-space routing, reflection, or switching of the optical signal through components such as MEMS mirrors or alignment detectors. Conversely, on the receiving side, the collimator can also refocus incoming parallel beams into the fiber with minimal loss.

In the depicted embodiment, the arrays 102, 104 are designed with more collimator positions than are strictly necessary for an example of 72 working channels. For example, while 72 active paths ultimately form the working cross connect, each array 102, 104 may include 81 or more total positions for manufacturing yield. Should certain collimators prove defective, surplus elements can be used instead, ensuring the overall design remains intact. Specifically, in this example, there are 81 elements 400, 402, 404 in each array-most elements 400 being standard 1320 nm collimator ports for traffic signals, two elements 402 serving as 850 nm alignment ports paired with a Metal-Semiconductor-Metal (MSM) quad detector (located at the top left and bottom right corners), and two elements 406 functioning as 850 nm mirror tilt measurement ports paired with a MEMS mirror (placed at the top right and bottom left corners). Those skilled in the art will appreciate that both the number of ports and the location of these different element types can vary in other embodiments.

FIG. 51 is a diagram of MEMS mirror arrays 106, 108 in the arrangement 100C, each arranged as a grid of individual mirror elements. As with the fiber collimators, these arrays 106, 108 incorporate extra mirror elements 410, 412 beyond the 72 required for final operation. The surplus mirrors help accommodate manufacturing variations, ensuring that any defective elements can be bypassed while still providing 72 fully functional mirrors. In typical implementations, each MEMS mirror element 410 is a small, micro-electromechanical device capable of precise two-axis tilt, allowing each beam path to be steered accurately toward a corresponding fiber collimator port.

In this example, most of the elements 410 are standard MEMS mirrors used for directing the 1320 nm traffic signals. Two specialized MSM (Metal-Semiconductor-Metal) quad detector elements 412 are located in the top left and bottom right corners, respectively. These detectors are used for alignment calibration: they measure the reflected or scattered light from a test beam (e.g., 850 nm) to provide real-time feedback on mirror tilt and beam positioning. This measurement information then feeds into the active alignment control loop, ensuring optimal beam coupling despite thermal shifts, vibration, or other disturbances. When integrated with the fiber collimator arrays 102, 104, the MEMS mirror arrays 106, 108 align so as to form 72 active optical paths in arrangement 100C.

Each sub-assembly of collimators or mirrors is individually placed in the housing 212 (see FIGS. 42-43), forming a rugged, modular element that can be installed or replaced without disturbing the rest of the system. These sub-assemblies, or cassettes, are then arranged within a larger mechanical housing sized to match the desired port count of the OCS being manufactured. This modular approach simplifies both manufacturing logistics and on-site repair, allowing a faulty sub-assembly to be swapped out swiftly while minimizing downtime.

Within the collimator assemblies, integrated actuators enable precise adjustment of the collimator port angles with respect to the corresponding MEMS mirror array. These actuators may employ stepper motors, piezoelectric mechanisms, or other fine-motion devices, providing multi-axis control to compensate for manufacturing tolerances, thermal expansion, or external vibration. By tuning the angular orientation of each individual collimator, the system aligns each optical path optimally, maintaining efficient signal coupling and minimizing insertion losses.

For the mirror arrays, co-alignment ensures that the mirrors share a consistent angular relationship to the plane of the array at any given drive voltage. Each MEMS mirror typically tilts electrostatically or electromagnetically, and defining a uniform baseline for mirror tilt across the array allows a predictable voltage offset to be applied for angle corrections. This offset is particularly useful in countering angular drift from mechanical variations or manufacturing imperfections. The feedback controller described in the following section further refines the alignment by actively measuring and adjusting beam positions in real time, offering a dither-free alternative to previously described dithering techniques. By eliminating the small, continuous oscillations inherent in dithering, this approach reduces unwanted noise, mechanical wear, and potential signal disturbances, thereby enhancing overall system stability and longevity.

Conventional active alignment techniques for free-space optical devices often rely on dithering each port carrying traffic signals. This means injecting small, periodic disturbances into the optical path so that the tap-off power of the signal can be monitored for alignment errors. Although effective for lower port counts, this approach becomes impractical as the number of ports increases. The need to tap and measure each signal significantly adds to system complexity, costs, and component counts. Moreover, dithering imparts an amplitude modulation onto the traffic signal itself, potentially disrupting receiver control loops and eroding link margin-both of which are undesirable in high-performance optical systems. In contrast, the method described here circumvents these issues by using dedicated probe paths and real-time feedback loops to maintain alignment. Because the probes operate independently from the data-carrying channels, there is no need to modulate or tap the primary traffic signals. This design not only scales more easily for large port counts, it also preserves signal integrity by eliminating the unwanted dithering effects that can degrade overall system performance.

In this approach, three primary components work in tandem to enable precise, real-time control of optical paths within the system. First, each collimator is mounted on a specialized fixture featuring angular control actuation. These actuators-whether mechanical, piezoelectric, or otherwise-allow fine-tuning of the collimator's orientation, ensuring that the outgoing light beam aligns accurately with the corresponding MEMS mirror array. Second, beam-centering measurements are carried out by photodetectors incorporated directly into the MEMS mirror arrays. In many cases, these detectors are configured as MSM quad detectors, which provide quadrant-based feedback on beam position. By comparing the photodetector signals from each quadrant, the system can determine if the beam has shifted off-center and subsequently adjust the collimator or mirror angles to reestablish the optimal beam path. Finally, the design reserves an additional tilt range in the MEMS mirrors to account for mechanical tolerances or alignment discrepancies. This extra tilt capability ensures that any small offset, once detected by the photodetectors, can be corrected without compromising the overall operation range of each mirror.

The overarching goal of this control system is threefold:

First, it enables bulk alignment, whereby each collimator array 102, 104 is matched to its respective MEMS mirror array 106, 108, an essential step previously referenced but described here in greater detail.

Second, it facilitates measurement of the angular offset between the two MEMS mirror arrays 106, 108 themselves (i.e., MEMS-to-MEMS Angles), ensuring that each mirror plane maintains a precise relationship to the other.

Lastly, the system employs specialized probe ports to perform end-to-end continuity measurements, verifying that signals traverse the intended paths with minimal loss. By combining these methods of alignment, angle detection, and continuity testing, the system effectively eliminates all common-mode unknowns in calculating the optimal MEMS mirror drive angles. Once identified, these factors can be actively controlled and adjusted in real time, enabling near-perfect beam alignment and significantly reducing overall insertion loss.

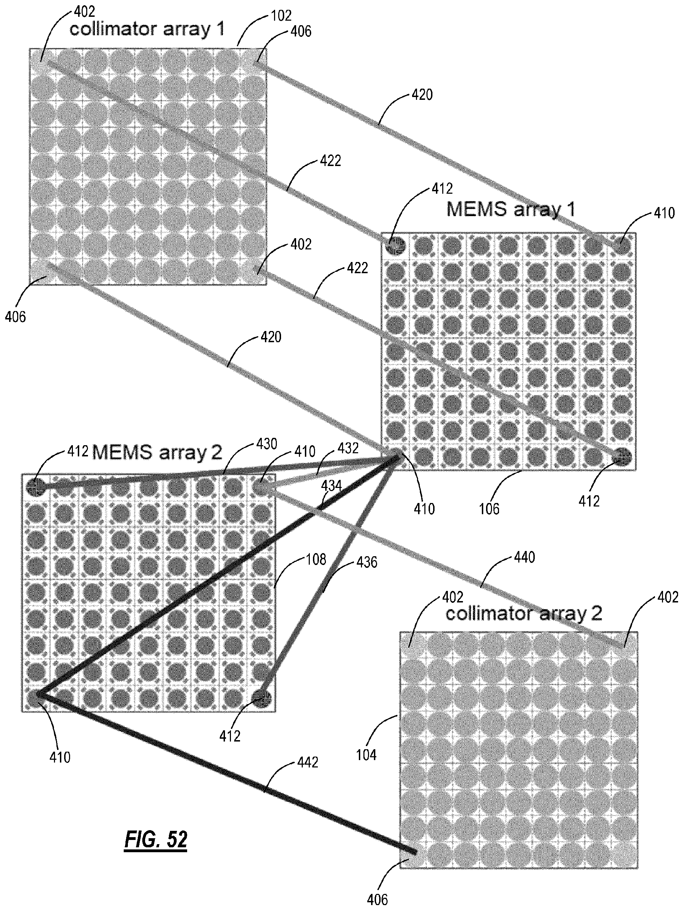

FIG. 52 is a diagram of the arrangement 100C in which two fiber collimator arrays 102, 104 are optically linked via two MEMS mirror arrays 106, 108. Slanted lines 420, 422 illustrate the free-space beam paths that connect specific elements on the collimator array 102 to corresponding points on the MEMS mirror array 106. For example, the line 420 bridges the specialized alignment element 406 on array 102 with a MEMS mirror element 410 on array 106, while the line 422 links a different alignment element 402 on array 102 to an integrated quad detector element 412 on array 106.

Within each collimator array 102, 104, select port elements 402, 406 operate at 850 nm and serve as dedicated alignment ports, whereas the main traffic-carrying ports run at 1320 nm. On the MEMS mirror arrays 106, 108, certain elements 412 are equipped with quad detectors that measure alignment beams in real time. By detecting small deviations in the beam's tilt or position, the active alignment control system can adjust both the collimator mounts and the MEMS mirrors to maintain precise beam steering. As a result, the system achieves high optical efficiency and low insertion loss, even when subject to environmental changes such as thermal fluctuations or mechanical perturbations.

Continuing the path, beam signals originating from element 406 on collimator array 102 travel to mirror element 410 at the bottom right of MEMS array 106. From there, the signals are relayed to MEMS array 108 via slanted lines 430, 432, 434, 436. Ultimately, these beams are redirected back along paths 440, 442 into the collimator array 102, reaching elements 402, 406 as needed. This multi-stage routing process showcases how each of the four arrays cooperates to form a fully functional, high port-count optical cross connect that can dynamically measure and correct its beam alignment through real-time feedback loops.

The quad detectors are relatively straightforward in their function: each detector is segmented into four quadrants that collectively measure the position and intensity of the incoming alignment beam, enabling high-precision feedback for real-time beam steering. By contrast, the mirror ports, positioned strategically within the optical path. can serve multiple roles. For instance, they might be used to redirect or sample an 850 nm alignment beam to verify that the optical path is properly established and remains stable over time. In some configurations, the mirror ports work in tandem with a bidirectional emitter/detector arrangement built into the collimator fiber, allowing the same port to emit and detect the beam as needed. This bidirectional feature simplifies the overall design, reduces component count, and ensures that alignment checks can be performed without physically swapping fibers or reconfiguring connections.

Beyond these alignment capabilities, an additional 1320 nm port pair can be dedicated to testing end-to-end continuity of the primary data channel. This ensures that the system can verify link integrity independently of the 850 nm alignment beam, a crucial advantage in high-port-count environments where traffic signals need to remain uninterrupted. By decoupling the alignment beam's function from the continuity test of the operational wavelength, the design maintains maximum flexibility and robustness, enabling both continuous monitoring and quick fault isolation without sacrificing overall data throughput.

### Bulk alignment

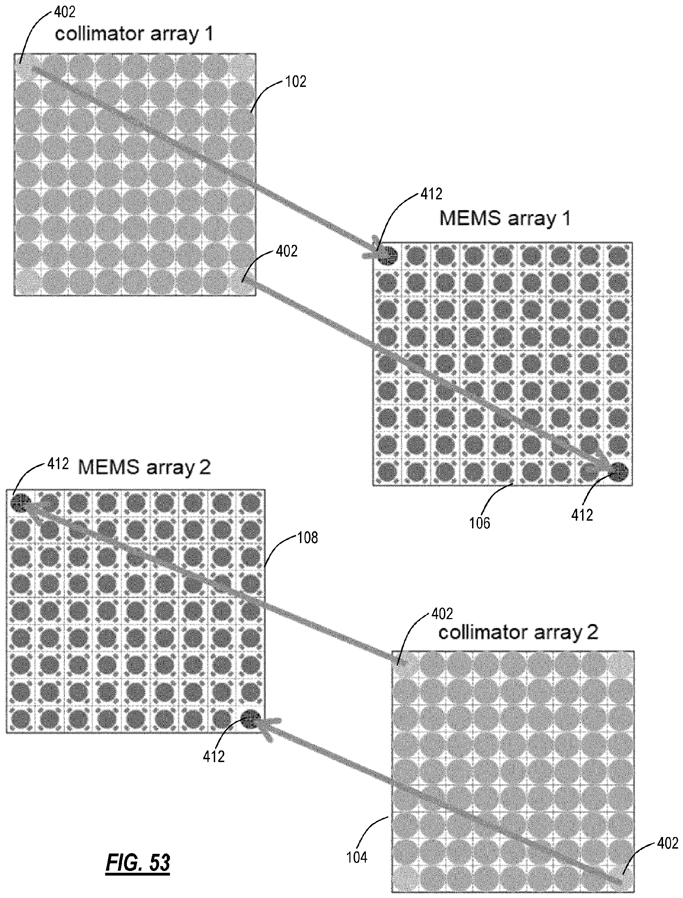

FIG. 53 is a diagram illustrating a bulk alignment step used to orient the collimator arrays 102, 104 relative to the MEMS mirror arrays 106, 108. In this depiction, the northwest (NW) and southeast (SE) probe ports 402 on each collimator array 102, 104 emit 850 nm alignment beams toward the MEMS mirror arrays 106, 108, where they land on the corresponding MSM quad detector elements 412. For reference, the NW corner appears at the top right, while the SE corner is at the bottom left, i.e., these cardinal directions are adopted simply to label positions on the page. By monitoring how each beam falls within the quadrants of the quad detector elements 412, the control system can identify both angular and lateral deviations between the collimator and mirror planes.

In this configuration, collimator arrays 102, 104 each feature two probe port elements 402, i.e., one at the NW corner and another at the SE corner, that simultaneously launch alignment beams across free space to their respective MEMS mirror arrays 106, 108. The quad detector elements 412, positioned in matching NW and SE locations on the MEMS arrays 106, 108, receive the beams and convert beam displacement data into voltage signals. The control system can then either adjust the collimator mounts using built-in actuators or apply small drive-voltage offsets to individual MEMS mirrors, or both, to achieve optimal alignment. Because only two probes per collimator array 102, 104 need to be aligned, the system can quickly establish a coarse alignment for the entire assembly without having to measure and adjust every traffic channel. Once the NW-SE reference lines are set, the rest of each array naturally falls into the correct alignment plane, requiring only fine-tuning to reach peak coupling efficiency.

As depicted in FIG. 53, the 850 nm alignment beams propagate downward (in the diagram's orientation) from the collimator arrays 102, 104 to the quad detector elements 412 on the MEMS mirror arrays 106, 108, with arrows indicating the beam paths. In some cases, small amounts of light may reflect off the MSM metal fingers at the detector surface rather than being entirely absorbed. However, in multi-tile implementations, this reflected light is arranged so as not to strike any adjacent quad detector element 412, thereby preventing cross-coupling. In a single-tile system, a similar layout ensures that only the intended detector picks up the signal. Because the position feedback from the quad detectors can be processed continuously, both collimator arrays 102, 104 remain actively locked in proper alignment despite operational shifts such as thermal expansion or vibration.

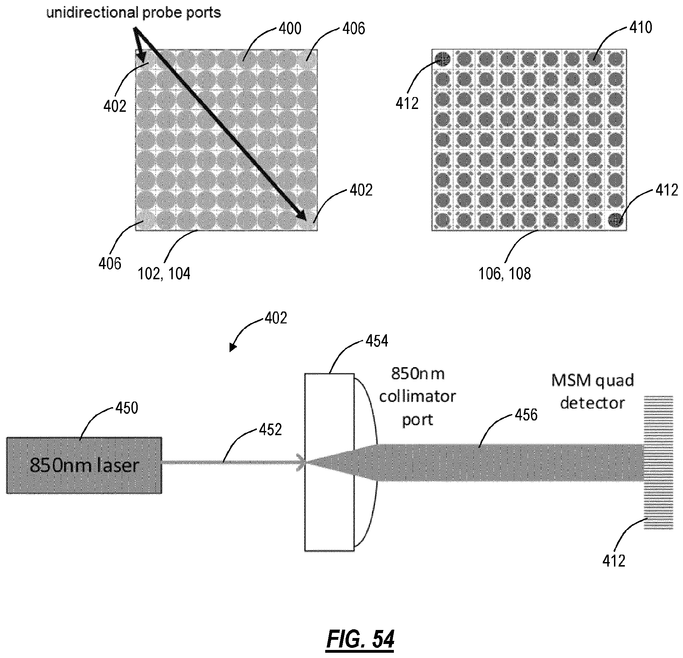

FIG. 54 is a diagram of an example port element 402 in the collimator arrays 102, 104. The port elements 402 dedicated to 850 nm alignment are unidirectional bulk alignment probe ports, each containing a laser diode source 450 that emits a signal 452 from an 850 nm collimator port 454, towards an MSM quad detector element 412 on the MEMS arrays 106, 108. Their purpose is to project a test beam 456 toward the quad detector element 412. This design choice minimizes complexity for the traffic-carrying elements, which operate at 1320 nm and are unaffected by the alignment process. By analyzing the quadrant signals from the detector, the control loop determines whether each beam is perfectly centered; if not, it commands the collimator or mirror mounts to make incremental angle or position adjustments. Crucially, this procedure can occur in-service-meaning normal data transmission at 1320 nm is uninterrupted while the 850 nm paths handle the alignment checks.

Although these example embodiments specifically shows two 850 nm ports at the NW and SE corners for illustrative purposes, other numbers or placements of alignment ports can be used in different embodiments. Similarly, the mechanical housing 212 that holds the collimator arrays 102, 104 and the MEMS mirror arrays 106, 108 can incorporate various alignment mechanisms, such as micromotor actuators, piezoelectric transducers, or other fine-tuning devices, to achieve the desired level of precision. By leveraging this flexible architecture, manufacturers can build larger or smaller versions of the OCS while preserving the same robust alignment strategy.

## MEMS to MEMS Angles and Continuity Check

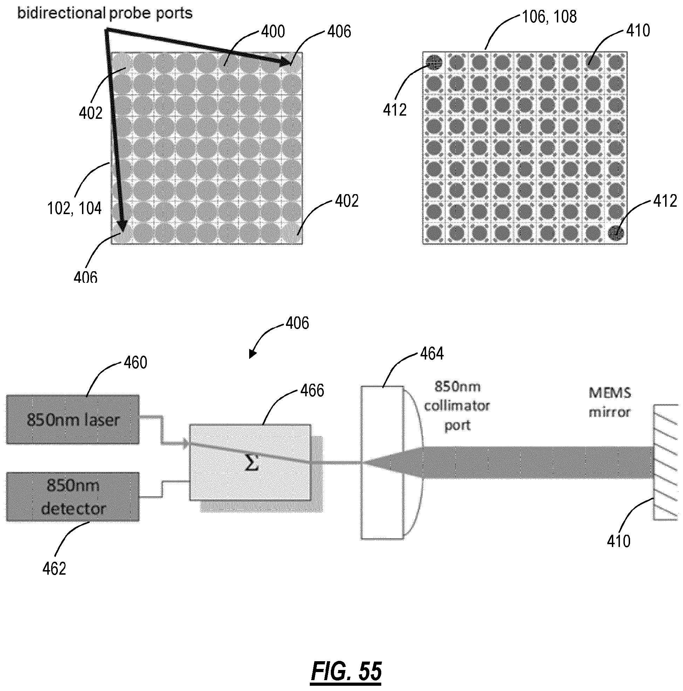

Once the bulk alignment step is established and held in place, the next task is to quantify the angular relationship between the MEMS mirror arrays 106, 108 relative to their ideal design angles. Additionally, an optional continuity check can be performed to ensure a fully operational optical path from one end of the system to the other, i.e., from the collimator array 102, through the MEMs arrays 106, 108, to the collimator array 104. FIG. 55 is a diagram of an example mirror-coupled, bidirectional probe port via the element 406 in the collimator arrays 102, 104, where each array incorporates two such ports, typically situated in the northeast (NE) and southwest (SW) positions. These ports correspond to MEMS mirror elements 410 mounted at the corners of the MEMS arrays 106, 108.

Each bidirectional probe port 406 includes a laser diode source 460 and a photodetector 462 coupled to an 850 nm collimator port 464 via a combining element 466, which could be a beam splitter, prism, or other wavelength/polarization-selective device. By integrating both emission and detection components into the same physical port, the element 406 functions in two modes: when the laser diode 460 is active, it emits an 850 nm probe beam; when the laser is off, the photodetector 462 monitors any incoming optical signal. This dual-purpose design minimizes hardware requirements and simplifies alignment routines by centralizing both transmission and reception within a single port.

In practice, the specific role of the port element 406 depends on how the MEMS mirrors are actuated at a given time:

(1) Measuring MEMS-to-MEMS Angles: When the MEMS mirror elements 410 at both corners are tilted such that the beam from one bidirectional port 406 is reflected across to the corresponding mirror on the other MEMS array and then returned to the originating port, the system can evaluate the angular offsets between the two MEMS mirror arrays 106, 108. If the returning beam is slightly displaced or deflected from the port's receiver, the control electronics determine whether each MEMS mirror 410 needs an angular correction. This measurement and feedback loop effectively characterizes and corrects the relative tilt or rotation between the two MEMS devices.

(2) Measuring Collimator-to-Collimator Angles: The mirror elements 410 can also be positioned to direct the beam from a port 406 element on the first collimator array 102 to a port 406 element on the second collimator array 104, enabling an end-to-end continuity check or angle measurement between the two collimator arrays 102, 104 themselves and through the MEMS arrays 106, 108. In this scenario, the beam passes across multiple reflections (e.g., from one MEMS array 106, 108 to another) before being detected at the far end. If the detected power level is low or the signal footprint is off-center, that indicates a possible misalignment in one or both collimator arrays 102, 104. The control system can then initiate fine adjustments on either side until alignment is restored, ensuring high coupling efficiency and confirming that the system is properly routing traffic signals.

By incorporating bidirectional probe ports in strategic positions on each collimator array 102, 104, the design offers a flexible, in-service method to perform advanced alignment checks, both MEMS-to-MEMS and collimator-to-collimator, while simultaneously verifying system continuity.

## MEMS-to-MEMS Angles

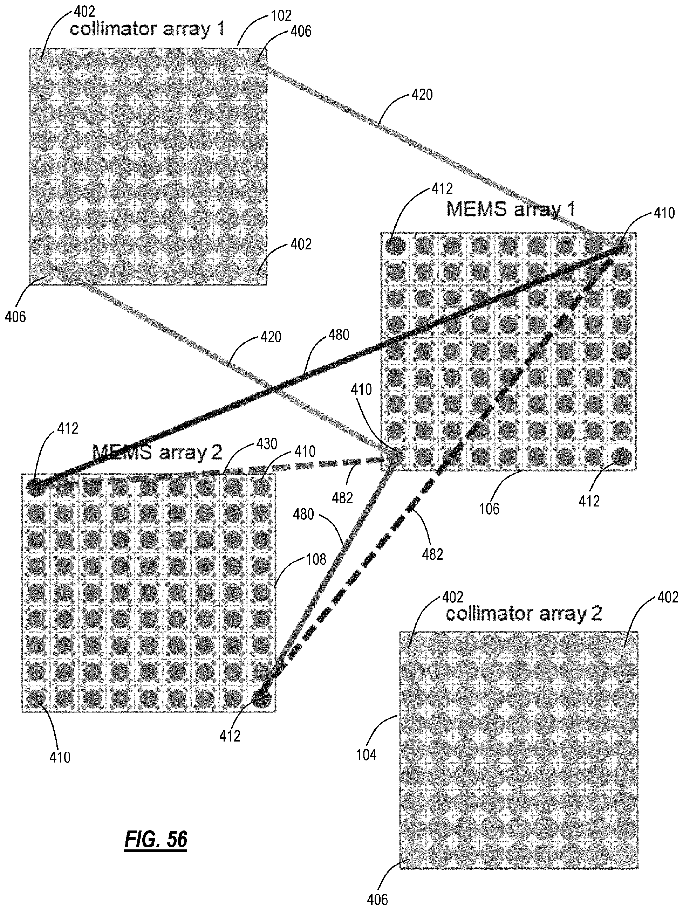

FIG. 56 is a schematic of how the two fiber collimator arrays 102, 104 interface with the two MEMS mirror arrays 106, 108 to measure MEMS-to-MEMS deflection angles once bulk alignment is complete. In this phase, each MEMS mirror element 410 on the first MEMS array 106 is tasked with steering an 850 nm test beam toward specific "target" points on the second MEMS array 108, i.e., the MSM quad detector elements 412. The feedback from these detectors reveals the beam's precise position, allowing the control system to refine each mirror's tilt angle. By comparing the measured angles against a standard calibration, the system identifies any offset needed to compensate for manufacturing tolerances, mechanical drift, or environmental effects. Once the offsets are determined, they can be applied to each MEMS tile to ensure consistent performance across the entire switching fabric. In multi-tile systems, each tile's MSM quad detector elements 412 can be cycled through in a similar manner, thus generating a comprehensive map of how each tile needs to be angled relative to its neighbors. During this process, the bulk-alignment sources are turned off to avoid interference with the test beams.

In FIG. 56, slanted lines 420 illustrate example rays propagating from collimator array 102 to MEMS array 106, and then onward to the second MEMS array 108. Each ray encounters a MEMS mirror element 410 on the first array 106, which redirects the beam at different times along the paths indicated by solid lines 480 and dashed lines 482. These paths terminate on separate quad detector elements 412 on the second MEMS array 108, allowing the control system to gather multiple reference points for angle measurements. Although the figure omits beams originating from the collimator array 104 for clarity, similar measurements can (and typically do) occur simultaneously on the opposite side of the system, ensuring that all paths within the optical cross connect are fully characterized and fine-tuned.

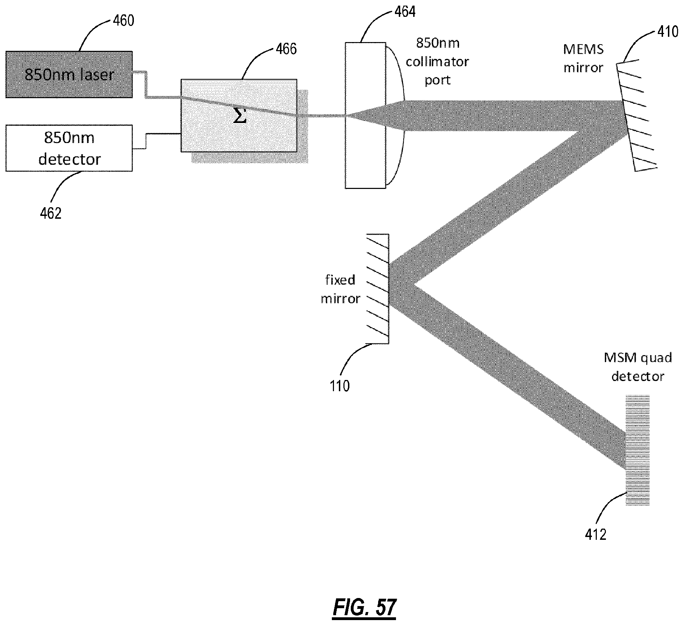

FIG. 57 is a diagram of the source-destination relationship for the beam used in these MEMS-to-MEMS angle measurements. Specifically, the laser diode source 460 at the 850 nm collimator port 464 sends out a test signal toward a designated MEMS mirror 410 on the first MEMS array 106. This mirror deflects the signal onto a fixed mirror 110, which then directs it toward a target quad detector 412 on the second MEMS array 108. At the same time, an analogous path in the reverse direction may be established, enabling concurrent measurements from the second MEMS array 108 back to the first. By collecting these multi-directional measurements, the control system can precisely calculate and store the angular offsets for each mirror-to-mirror link, ensuring minimal insertion loss and maximum optical performance throughout the entire network of collimators and MEMS mirrors.

### Collimator-to-Collimator Angles

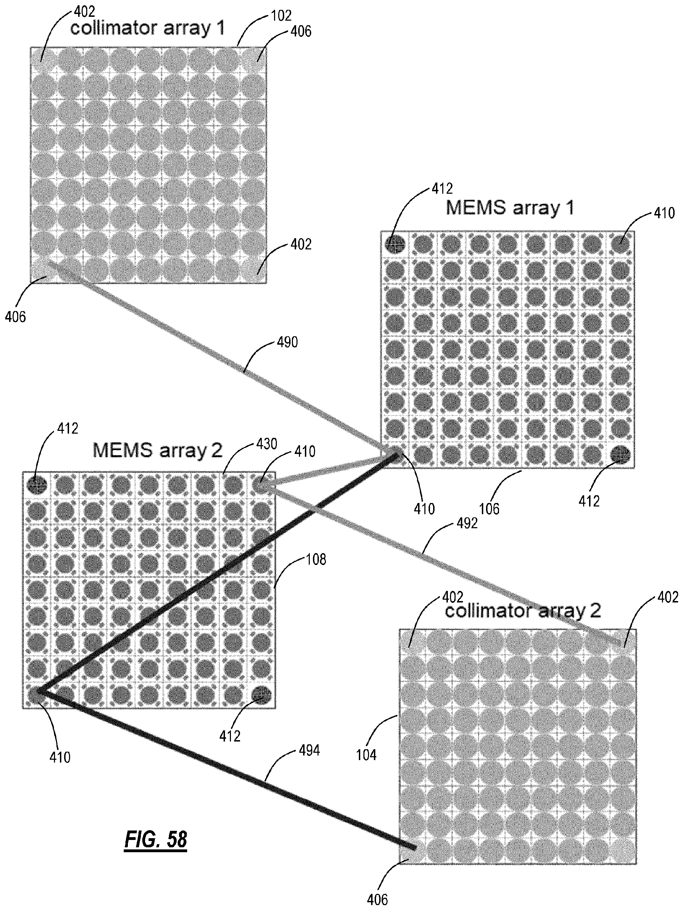

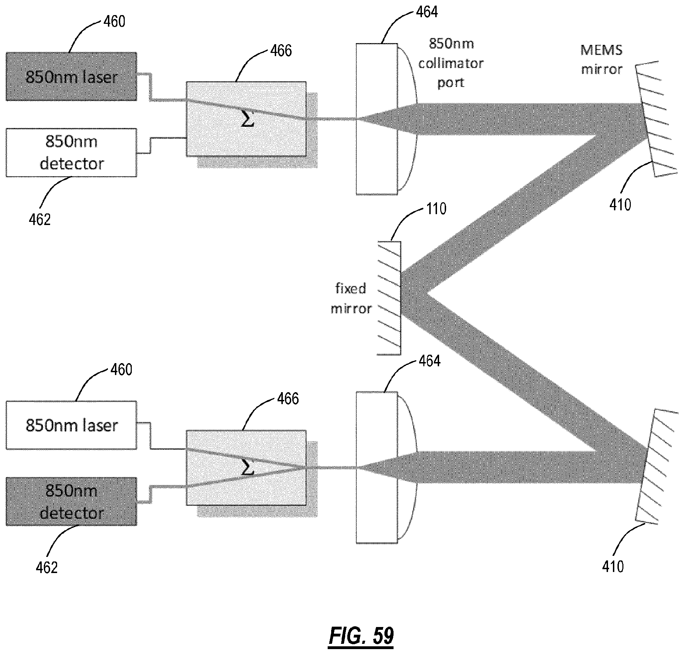

FIG. 58 is a high-level schematic showing how the two fiber collimator arrays 102, 104 interface with the two MEMS mirror arrays 106, 108 to conduct an end-to-end continuity check. Meanwhile, FIG. 59 details the source-destination relationship for the beam used in this check. Although the bulk alignment procedure and the MEMS-to-MEMS angle alignment are typically sufficient to ensure that signals traverse the intended paths, a final continuity check offers an extra layer of validation. By confirming that a beam launched from one collimator array correctly reaches its designated destination on the other collimator array, the system verifies that all mirror deflections and collimator angles are collectively aligned for full, unobstructed signal transmission.

As illustrated in FIG. 57, only one of two possible probe ports, specifically, the southwest (SW) port element 406, is shown for simplicity; in practice, the northeast (NE) port can also serve the same function. Additionally, the check can be performed in either direction, though it is usually sufficient to verify a single direction given the inherently symmetrical nature of the optical paths. The lines labeled 490 represent the outgoing beam from the source port to the nearest MEMS mirror 410, which then directs the beam via one of two possible paths 492 or 494. Depending on which path is chosen, the beam ultimately arrives at the opposite collimator array, where it is detected. For the continuity test, one end of the system acts as the source while the other end is set up to receive and measure the signal's power and beam profile. Because the optical path is reciprocal, there is no need to perform this step in both directions.

By designating which mirror elements 410 and which ports 406 will be used for the continuity check, the system ensures a thorough test of the entire optical route under the same operational conditions used for data transmission. This helps confirm that no unforeseen obstructions, dust particles, or mechanical misalignments remain after the primary alignment steps. As a result, operators gain confidence in the optical cross connect's reliability before putting it into continuous service. If the measured power at the receiver is within the expected range, the continuity check is deemed successful. Otherwise, any drop below threshold levels can prompt further fine-tuning or inspection. By incorporating this final verification step, the design significantly reduces the likelihood of intermittent link failures, ensuring robust, high-efficiency connections across the full port count of the OCS.

### Detector elements 412

In one embodiment, each detector element 412 is implemented as a quad MSM photodetector fabricated directly onto the MEMS mirror arrays 106, 108. This integration leverages the lithographic steps already present in the MEMS manufacturing process, allowing the photodetector's metallic contacts and active semiconductor regions to be formed within the same wafer-level workflow. By locating the detector on the same physical device as the MEMS mirrors, alignment tolerances can be minimized, and packaging complexity is reduced. Two possible fabrication approaches include:

(1) Applying Metal Schottky Contacts on the Substrate Wafer--In this approach, the substrate wafer itself, typically a lightly doped silicon wafer, serves as the photodetecting layer. The metal Schottky contacts are patterned and deposited on the substrate surface. Because the substrate wafer often has better electrical properties (e.g., higher resistivity and lower doping), it can facilitate low dark currents and higher responsivity at 850 nm. However, care must be taken to maintain the wafer's desired mechanical and thermal properties-particularly since it also hosts the MEMS structures.

(2) Applying Metal Schottky Contacts on a Subsequent Epitaxy Layer-Alternatively, a secondary epitaxial layer can be grown on top of the substrate. The mirror and drive structures are typically defined in this layer, but because the layer often has higher doping levels for mechanical robustness, it may introduce greater dark current and reduce detector sensitivity. Additional process steps or doping control may be needed to achieve acceptable performance. Nonetheless, integrating the detector at this stage can streamline fabrication if the substrate is already heavily utilized for MEMS actuation or mirror formation.

Other embodiments expand the detection options further:

(1) Depositing a Different Semiconductor Material (e.g., Germanium)-Instead of relying solely on silicon-based photodetection at 850 nm, the MEMS process could include depositing a germanium (Ge) layer, which is inherently sensitive to longer wavelengths (including 1320 nm). By designing the photodiodes to detect the same wavelength used for data signals, it becomes unnecessary to maintain a separate 850 nm alignment beam. This unified-wavelength scheme simplifies the optical design, as the probe ports and traffic channels can employ the same focusing and filtering elements. However, adding a Ge deposition step requires careful integration with the existing MEMS manufacturing flow, including considerations for thermal budgets, adhesion, and potential stress between layers.

(2) Mounting a Separately Manufactured Photodetector-In certain scenarios, it may be advantageous to fabricate the MEMS mirrors and photodetectors independently, then attach the detectors to the MEMS arrays at the positions where beam centering measurements are needed. This modular approach allows freedom in selecting any photodetector type-be it silicon-based, germanium-based, or even III-V semiconductors-capable of detecting the chosen wavelength (e.g., 1320 nm). Although this can introduce additional assembly steps and alignment challenges, it may yield higher overall production yield by isolating the complexities of photodiode fabrication from the mechanical precision required for MEMS devices. It also offers the option to swap or upgrade detectors later without reworking the entire MEMS assembly.

By employing any of these fabrication or mounting strategies, the system gains robust, in-situ detection capabilities that enable precise active alignment. Selecting the optimal approach depends on cost, manufacturing resources, and design goals such as wavelength, detector performance, and overall integration complexity.

### Process for active alignment

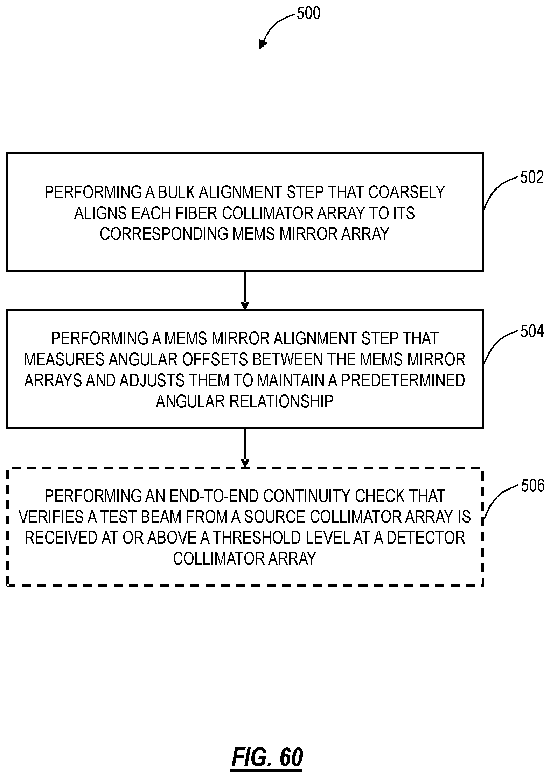

FIG. 60 is a flowchart of a process 500 actively aligning a high port count optical cross connect that includes at least one pair of fiber collimator arrays and at least one pair of MEMS mirror arrays. In various embodiments, the process 500 contemplates implementation with a modular, high port count optical cross connect such as the ones described herein.

The process 500 includes performing a bulk alignment step that coarsely aligns each fiber collimator array to its corresponding MEMS mirror array (step 502); and performing a MEMS mirror alignment step that measures angular offsets between the MEMS mirror arrays and adjusts them to maintain a predetermined angular relationship (step 504). The process 500 can also include performing an end-to-end continuity check that verifies a test beam from a source collimator array is received at or above a threshold level at a detector collimator array (step 506).

The bulk alignment step can include, for a given fiber collimator array and a corresponding MEMs mirror array, emitting at least one alignment beam from a unidirectional probe port on the given fiber collimator array; detecting positional data of the alignment beam at a quadrant detector on the corresponding MEMS mirror array; and adjusting an orientation of either the given fiber collimator array or the corresponding MEMS mirror array based on the detected positional data, for coarse alignment. The unidirectional probe port can include a laser diode source configured to emit an alignment beam towards the quadrant detector located on the corresponding MEMS mirror array. The adjusting the orientation can be achieved via actuators selected including one or more of stepper motors, piezoelectric transducers, or micromotor assemblies. The quadrant detector on each MEMS mirror array can be fabricated via a Metal-Semiconductor-Metal (MSM) process on a silicon substrate or epitaxial layer, ensuring in-situ detection capability for the alignment beams.

The MEMS mirror alignment step can include emitting a second alignment beam from a first MEMS mirror array to a target detector region on a second MEMS mirror array; measuring an angular offset between the first and second MEMS mirror arrays based on beam displacement within the target detector region; and applying a tilt correction to at least one of the first and second MEMS mirror arrays to compensate for the measured offset. Each of the first and second MEMS arrays can include multiple mirror elements each capable of two-axis tilt, and the tilt correction is determined by analyzing the second alignment beam. At least one fixed mirror is disposed between the first and second MEMS mirror arrays, and the method further comprises reflecting the second alignment beam off the fixed mirror before it reaches the second MEMS mirror array.

The end-to-end continuity check can include designating one fiber collimator array as a source for the test beam and another fiber collimator array as a detector; transmitting the test beam through MEMS mirror arrays; and confirming that a received power level at the detector meets or exceeds a predetermined threshold to validate an unobstructed optical path. The test beam for the end-to-end continuity check can be at a wavelength different from data traffic for in-service operation. The test beam can be launched from a bidirectional probe port on the source fiber collimator array and is detected by a bidirectional probe port on a destination fiber collimator array, each probe port including a laser diode source and a photodetector coupled via a beam-combining element.

Each fiber collimator array and each MEMS mirror array can be formed as an independent sub-assembly. The process 500 can further include, responsive to installing a plurality of these sub-assemblies within a larger mechanical housing sized to accommodate a desired port count, implementing the performing steps. Each MEMS mirror array can include redundant mirror elements and each fiber collimator array includes redundant collimator ports, and the method further comprises selecting functional mirror elements or collimator ports if primary elements are determined to be defective or misaligned beyond acceptable tolerances. In an embodiment, the high port count optical cross connect supports at least 1000 ports, and the steps of bulk alignment, MEMS mirror alignment, and end-to-end continuity check are repeated periodically in-service to compensate for thermal drift, mechanical vibration, or other environmental factors.

In another embodiment, an optical cross connect includes a first fiber collimator array and a second fiber collimator array, each array having at least one unidirectional probe port configured to emit a first alignment beam for coarse, bulk alignment; a first MEMS mirror array and a second MEMS mirror array, each including a plurality of tiltable mirror elements and at least one quadrant detector adapted to detect said alignment beam; and control circuitry configured to receive positional data from the quadrant detector to coarsely align each fiber collimator array to its corresponding MEMS mirror array, measure angular offsets between the first and second MEMS mirror arrays and adjust at least one MEMS mirror array to maintain a predetermined angular relationship, and conduct an end-to-end continuity check by transmitting a test beam from a source fiber collimator array to a detector fiber collimator array and confirming the test beam is received at or above a threshold power level.

Each unidirectional probe port can include a laser diode source configured to emit an alignment beam toward a quadrant detector located on the corresponding MEMS mirror array. Each quadrant detector on the MEMS mirror arrays can be implemented as a Metal-Semiconductor-Metal (MSM) structure fabricated on a silicon substrate or epitaxial layer, thereby providing in-situ detection of alignment beams. The optical cross connect can further include at least one fixed mirror positioned between the first MEMS mirror array and the second MEMS mirror array, the fixed mirror being adapted to reflect a second alignment beam used to measure and compensate for angular offsets across multiple reflections. Each fiber collimator array and each MEMS mirror array can be formed as an independent sub-assembly, and wherein these sub-assemblies are installable within a mechanical housing sized to accommodate a desired port count.

## Conclusion

Those skilled in the art will recognize that the various embodiments may include processing circuitry of various types. The processing circuitry might include, but are not limited to, general-purpose microprocessors; Central Processing Units (CPUs); Digital Signal Processors (DSPs); specialized processors such as Network Processors (NPs) or Network Processing Units (NPUs), GPUs; Field Programmable Gate Arrays (FPGAs); or similar devices. The processing circuitry may operate under the control of unique program instructions stored in their memory (software and/or firmware) to execute, in combination with certain non-processor circuits, either a portion or the entirety of the functionalities described for the methods and/or systems herein. Alternatively, these functions might be executed by a state machine devoid of stored program instructions, or through one or more Application-Specific Integrated Circuits (ASICs), where each function or a combination of functions is realized through dedicated logic or circuit designs. Naturally, a hybrid approach combining these methodologies may be employed. For certain disclosed embodiments, a hardware device, possibly integrated with software, firmware, or both, might be denominated as circuitry, logic, or circuits "configured to" or "adapted to" execute a series of operations, steps, methods, processes, algorithms, functions, or techniques as described herein for various implementations.

Additionally, some embodiments may incorporate a non-transitory computer-readable storage medium that stores computer-readable instructions for programming any combination of a computer, server, appliance, device, module, processor, or circuit (collectively "system"), each potentially equipped with one or more processors. These instructions, when executed, enable the system to perform the functions as delineated and claimed in this document. Such non-transitory computer-readable storage mediums can include, but are not limited to, hard disks, optical storage devices, magnetic storage devices, Read-Only Memory (ROM), Programmable Read-Only Memory (PROM), Erasable Programmable Read-Only Memory (EPROM), Electrically Erasable Programmable Read-Only Memory (EEPROM), Flash memory, etc. The software, once stored on these mediums, includes executable instructions that, upon execution by one or more processors or any programmable circuitry, instruct the processor or circuitry to undertake a series of operations, steps, methods, processes, algorithms, functions, or techniques as detailed herein for the various embodiments.

In this disclosure, including the claims, the phrases "at least one of" or "one or more of" when referring to a list of items mean any combination of those items, including any single item. For example, the expressions "at least one of A, B, or C," "at least one of A, B, and C," "one or more of A, B, or C," and "one or more of A, B, and C" cover the possibilities of: only A, only B, only C, a combination of A and B, A and C, B and C, and the combination of A, B, and C. This can include more or fewer elements than just A, B, and C. Additionally, the terms "comprise," "comprises," "comprising," "include," "includes," and "including" are intended to be open-ended and non-limiting. These terms specify essential elements or steps but do not exclude additional elements or steps, even when a claim or series of claims includes more than one of these terms.

Although operations, steps, instructions, blocks, and similar elements (collectively referred to as "steps") are shown or described in the drawings, descriptions, and claims in a specific order, this does not imply they must be performed in that sequence unless explicitly stated. It also does not imply that all depicted operations are necessary to achieve desirable results. In the drawings, descriptions, and claims, extra steps can occur before, after, simultaneously with, or between any of the illustrated, described, or claimed steps. Multitasking, parallel processing, and other types of concurrent processing are also contemplated. Furthermore, the separation of system components or steps described should not be interpreted as mandatory for all implementations; also, components, steps, elements, etc. can be integrated into a single implementation or distributed across multiple implementations.

While this disclosure has been detailed and illustrated through specific embodiments and examples, it should be understood by those skilled in the art that numerous variations and modifications can perform equivalent functions or achieve comparable results. Such alternative embodiments and variations, even if not explicitly mentioned but that achieve the objectives and adhere to the principles disclosed herein, fall within the spirit and scope of this disclosure. Accordingly, they are envisioned and encompassed by this disclosure and are intended to be protected under the associated claims. In other words, the present disclosure anticipates combinations and permutations of the described elements, operations, steps, methods, processes, algorithms, functions, techniques, modules, circuits, and so on, in any conceivable order or manner-whether collectively, in subsets, or individually-thereby broadening the range of potential embodiments.

## Claims

1. An optical cross connect (20) comprising:

   a plurality of subassemblies (10) each including one or more of an array of collimators (50, 52) and an array of adjustable MEMS mirrors (54, 56),
   the plurality of subassemblies (10) being configured to modularly scale a size of the optical cross connect (20) and arranged relative to one another with an optical propagation region (22) in between, and
   at least one of the plurality of subassemblies (10) with the array of collimators (50, 52) including one or more probe ports (16) configured to support an alignment signal for active alignment control.

2. The optical cross connect (20) of claim 1, wherein at least one of the plurality of subassemblies (10) with the array of adjustable mirrors (54, 56) includes one or more detectors (120, 412) disposed in place of a mirror, the detectors configured to detect alignment signals.

3. The optical cross connect (20) of claim 1 or 2, wherein each subassembly (10) comprises a housing (18, 212) supporting the array of collimators (50, 52) or array of mirrors (54, 56), the housing including optical connections (28) to the array of collimators (50, 52) and electrical connectors (30) to the array of mirrors (54, 56).

4. The optical cross connect (20) of any of the preceding claims, wherein the plurality of subassemblies (10) comprise a first set and a second set arranged opposing one another with the optical propagation region (22) in between.

5. The optical cross connect (20) of any of the preceding claims, wherein the probe ports (16) include at least three ports disposed at edge positions of the array of collimators (50, 52).

6. The optical cross connect (20) of any of the preceding claims, wherein the control circuitry is configured to perform a bulk alignment step that coarsely aligns each fiber collimator array (50, 52) to a corresponding MEMS mirror array (54, 56) using alignment beams emitted from the probe ports (16) and detected by detectors (120, 412).

7. The optical cross connect (20) of claim 6, wherein the probe port (16) comprises a laser diode source (450) configured to emit the alignment beam toward the detector (120, 412).

8. The optical cross connect (20) of claim 6 or 7, wherein adjustment during bulk alignment is achieved using actuators including one or more of stepper motors, piezoelectric transducers, or micromotor assemblies.

9. The optical cross connect (20) of any of claims 6 to 8, wherein the detector (120, 412) is fabricated as a Metal-Semiconductor-Metal (MSM) photodetector on a silicon substrate or epitaxial layer.

10. The optical cross connect (20) of any of the preceding claims, wherein the control circuitry is further configured to perform a MEMS-to-MEMS mirror alignment step by

emitting a second alignment beam from a first MEMS mirror array (54) to a detector region (412) of a second MEMS mirror array (56),
measuring angular offsets between the MEMS mirror arrays (54, 56), and applying tilt corrections to at least one of the MEMS mirror arrays (54, 56).

11. The optical cross connect (20) of claim 10, wherein a fixed mirror (110) is disposed between the MEMS mirror arrays (54, 56) to reflect the second alignment beam before detection.

12. The optical cross connect (20) of any of the preceding claims, wherein the control circuitry is configured to perform an end-to-end continuity check by transmitting a test beam from a source fiber collimator array (50) through the MEMS mirror arrays (54, 56) to a detector fiber collimator array (52) and confirming reception at or above a threshold power level.

13. The optical cross connect (20) of claim 12, wherein the test beam is transmitted at a wavelength different from in-service traffic.

14. The optical cross connect (20) of claim 12 or 13, wherein the test beam is transmitted from a bidirectional probe port (406) including a laser diode (460) and a photodetector (462) coupled via a beam-combining element (466).

15. The optical cross connect (20) of any of the preceding claims, wherein the optical cross connect (20) supports at least 1000 ports, and active alignment steps of bulk alignment, MEMS-to-MEMS mirror alignment, and continuity check are repeatable in-service to compensate for thermal drift, vibration, or environmental changes.

*FIG. 1*

○ TRAFFIC PORT/MIRROR

◉ PROBE PORT/MIRROR

*FIG. 2*

_FIG. 3_

*FIG. 4*

OPTICAL CONNECTIONS
ELECTRICAL CONNECTIONS

PIECEWISE CURVED PLANE

MIRROR ARRAY PLANE
COLLIMATOR PLANE

*FIG. 5*

MIRROR ARRAY
PLANE

32

34

COLLIMATOR
PLANE

FIG. 6

30

28

ELECTRICAL
CONNECTIONS

OPTICAL
CONNECTIONS

40

INPUT ARRAY $T_2$

42

$U_1$

$T_1$

1ST MIRROR ARRAY $U_2$

$T_4$

$T_3$

44

$V_2$

$U_4$

$V_1$

$U_3$

46

$W_2$

$V_4$

$W_1$

FIG. 7

$V_3$ 2ND MIRROR ARRAY

$W_4$

$W_3$ OUTPUT ARRAY

transmission vs angle

FIG. 8

dither angle

FIG. 9

FIG. 10

FIG. 11

FIG. 12

output of feedback receiver

DC
fundamental
second harmonic

output magnitude

angle error

54

50

**_FIG. 13_**

52

56

54

50

52

56

**_FIG. 14_**

Vertical Span: 17.9461°; Horizontal Span: 17.661°

## FIG. 15

Vertical Span: 16.3128°; Horizontal Span: 16.1302°

*FIG. 16*

**Maximum Vertical Anglar Span = 16.3128 degrees**

*FIG. 17*

**Maximum Horizontal Anglar Span = 16.1302 degrees**

*FIG. 18*

**_FIG. 19_**

**_FIG. 20_**

*FIG. 21*

**FIG. 22**

*FIG. 23*

MICRON

*FIG. 24*

RADIAN

80

IN THE OPTICAL CROSS CONNECT THAT INCLUDES A PLURALITY OF ARRAYS WITH EACH ARRAY INCLUDING ONE OR MORE OF COLLIMATORS AND ADJUSTABLE MIRRORS, TRANSMITTING AN ALIGNMENT SIGNAL FROM AN INPUT PROBE PORT ON AN INPUT ARRAY OF COLLIMATORS TO A FIRST MIRROR PROBE PORT ON A FIRST MIRROR ARRAY — 82

DIRECTING THE ALIGNMENT SIGNAL FROM THE FIRST MIRROR PORT TO A SECOND MIRROR PROBE PORT ON A SECOND MIRROR ARRAY — 84

RECEIVING AND MEASURING THE ALIGNMENT SIGNAL ON AN OUTPUT PROBE PORT ON AN OUTPUT ARRAY — 86

COMPENSATING FOR ANGULAR ALIGNMENT OF MIRRORS ON THE FIRST MIRROR ARRAY AND THE SECOND MIRROR ARRAY BASED ON THE MEASURING — 88

*FIG. 25*

100A

FIXED MIRROR — 110

INPUT FIBER/LENS
ARRAY

OUTPUT FIBER/LENS
ARRAY

102

104

22

106    MEMS ARRAY 1    MEMS ARRAY 2    108

**_FIG. 26_**

100B

FIXED MIRROR — 110

INPUT FIBER/LENS
ARRAY

OUTPUT FIBER/LENS
ARRAY

102

104

22

**_FIG. 27_**

MEMS ARRAY 1    MEMS ARRAY 2

106    108

100C

FIXED MIRROR — 110

INPUT FIBER/LENS
ARRAY

OUTPUT FIBER/LENS
ARRAY

22

**_FIG. 28_**

102

104

MEMS ARRAY 1    MEMS ARRAY 2

106    108

_FIG. 29_

○ MEMS MIRROR

◉ QUAD DETECTOR

_FIG. 30_

_FIG. 31_

*FIG. 32*

Front

*FIG. 33*

Rear

*FIG. 34*

Side

**FIG. 35**

**FIG. 36**

**FIG. 37**

*FIG. 38*

*FIG. 39*

212

232

230

*FIG. 40*

212

230

234

232

*FIG. 41*

FIG. 42

FIG. 43

Actuators
counteract spring
force and adjust
optics in this plane

*Pivot*

Springs apply
force

*FIG. 44*

Springs apply force

*Pivot*

*FIG. 45*

Actuators counteract spring force and adjust
optics in this plane

*FIG. 46*

*FIG. 47*

*FIG. 48*

*FIG. 49*

## Fiber Collimator Array
## 81 Elements in 12.6x12.6 mm

## MEMS Mirror Array
## 81 Elements in 13.4x12.6 mm

400
Standard 1320nm port

402
850nm collimator alignment port paired with MSM quad detector

406
850nm mirror tilt measurement port paired with a MEMS mirrror

410
Standard mirror

412
MSM quad detector

**FIG. 50**

**FIG. 51**

EP 4 707 887 A1

_FIG. 52_

*FIG. 53*

EP 4 707 887 A1

*FIG. 54*

54

bidirectional probe ports

400    406

402

102, 104

406

402

106, 108    410

412    412

406

460    466    464

850nm laser    Σ    850nm
collimator
port    MEMS
mirror

850nm
detector

462    410

**FIG. 55**

FIG. 56

**FIG. 57**

*FIG. 58*

*FIG. 59*

500

┌─────────────────────────────────────────────────┐
│                                                 │  502
│   PERFORMING A BULK ALIGNMENT STEP THAT COARSELY │
│      ALIGNS EACH FIBER COLLIMATOR ARRAY TO ITS   │
│        CORRESPONDING MEMS MIRROR ARRAY           │
│                                                 │
└─────────────────────────────────────────────────┘

┌─────────────────────────────────────────────────┐
│                                                 │  504
│     PERFORMING A MEMS MIRROR ALIGNMENT STEP THAT │
│  MEASURES ANGULAR OFFSETS BETWEEN THE MEMS MIRROR │
│   ARRAYS AND ADJUSTS THEM TO MAINTAIN A PREDETERMINED │
│             ANGULAR RELATIONSHIP                 │
│                                                 │
└─────────────────────────────────────────────────┘

┌─ ─ ─ ─ ─ ─ ─ ─ ─ ─ ─ ─ ─ ─ ─ ─ ─ ─ ─ ─ ─ ─ ─ ─ ┐
│                                                 │  506
│     PERFORMING AN END-TO-END CONTINUITY CHECK THAT │
│  VERIFIES A TEST BEAM FROM A SOURCE COLLIMATOR ARRAY IS │
│   RECEIVED AT OR ABOVE A THRESHOLD LEVEL AT A DETECTOR │
│               COLLIMATOR ARRAY                  │
│                                                 │
└─ ─ ─ ─ ─ ─ ─ ─ ─ ─ ─ ─ ─ ─ ─ ─ ─ ─ ─ ─ ─ ─ ─ ─ ┘

## *FIG. 60*

Europäisches
Patentamt

European
Patent Office

Office européen
des brevets

# EUROPEAN SEARCH REPORT

**Application Number**

EP 25 20 1252

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 7 072 031 B2 (NORTEL NETWORKS LTD [CA]) 4 July 2006 (2006-07-04) | 1,3-12, 14,15 | INV. G02B6/35 |
| A | * column 1, line 24 - line 33 * <br> * column 1, line 37 - column 2, line 2 * <br> * column 2, line 62 - column 11, line 2; figures 1-3,8 * | 2 | |
| X | US 2002/181848 A1 (LEMOFF BRIAN E [US] ET AL) 5 December 2002 (2002-12-05) | 1,3-15 | |
| A | * paragraphs [0005], [0017] - [0030]; figures 2,3 * | 2 | |
| A | US 2015/041629 A1 (GRAVES ALAN FRANK [CA] ET AL) 12 February 2015 (2015-02-12) <br> * abstract * <br> * paragraphs [0017] - [0129]; figures * | 1-15 | |
| A | US 2002/176654 A1 (BOGER DAVID [US] ET AL) 28 November 2002 (2002-11-28) <br> * paragraph [0042]; figures 1-4 * <br> * paragraph [0043] * <br> * paragraph [0079]; figures 14-16 * | 3,8 | **TECHNICAL FIELDS SEARCHED (IPC)** <br><br> G02B |
| A | US 6 950 570 B1 (NOVOTNY VLAD [US]) 27 September 2005 (2005-09-27) <br> * column 1, line 8 - line 15 * <br> * column 10, line 34 - line 61 * | 8 | |

The present search report has been drawn up for all claims

| Place of search | Date of completion of the search | Examiner |
|---|---|---|
| The Hague | 14 January 2026 | Cohen, Adam |

EPO FORM 1503 03.82 (P04C01)

## ANNEX TO THE EUROPEAN SEARCH REPORT
## ON EUROPEAN PATENT APPLICATION NO.

EP 25 20 1252

This annex lists the patent family members relating to the patent documents cited in the above-mentioned European search report.
The members are as contained in the European Patent Office EDP file on
The European Patent Office is in no way liable for these particulars which are merely given for the purpose of information.

14-01-2026

| Patent document cited in search report | | Publication date | Patent family member(s) | | Publication date |
|---|---|---|---|---|---|
| US 7072031 | B2 | 04-07-2006 | NONE | | |
| US 2002181848 | A1 | 05-12-2002 | JP | 2003015062 A | 15-01-2003 |
| | | | US | 2002181848 A1 | 05-12-2002 |
| US 2015041629 | A1 | 12-02-2015 | CN | 105408788 A | 16-03-2016 |
| | | | US | 2015041629 A1 | 12-02-2015 |
| | | | US | 2016087628 A1 | 24-03-2016 |
| | | | WO | 2015021899 A2 | 19-02-2015 |
| US 2002176654 | A1 | 28-11-2002 | NONE | | |
| US 6950570 | B1 | 27-09-2005 | US | 6950570 B1 | 27-09-2005 |
| | | | US | 7058253 B1 | 06-06-2006 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **URATA, RYOHEI et al.** Mission Apollo: landing optical circuit switching at datacenter scale. *arXiv:2208.10041*, 2022

- **GOODWIN**. Dynamic Alignment of Small Optical Components. *Journal of Lightwave Technology*, January 1987, vol. LT-5 (1)